# EUROPEAN PATENT APPLICATION

(11) **EP 4 852 499 A1**
(43) Date of publication of application: **09.12.2026**
(21) Application number: 24920905.7
(22) Date of filing: 31.01.2024
(51) Int. Cl.: H04W 24/10

(54) **COMMUNICATION METHOD, APPARATUS AND DEVICE, CHIP AND STORAGE MEDIUM**

(71) Applicant: GUANGDONG OPPO MOBILE TELECOMMUNICATIONS CORP., LTD., Dongguan, Guangdong 523860 (CN)
(72) Inventor: CAO, Jianfei, Dongguan, Guangdong 523860 (CN)
(74) Representative: Taor, Simon Edward William
(86) International application number: PCT/CN2024/075060
(87) International publication number: WO 2025/160836

(57) **Abstract**

The present application provides a communication method, apparatus and device, a chip and a storage medium. The method comprises: when a first event meets a preset condition, sending the first event to a network device on a first physical uplink control channel (PUCCH) resource or a first physical uplink shared channel (PUSCH) resource, wherein the first event is used for the network device to determine a first service space filter in a first time period.

## Description

### TECHNICAL FIELD

The disclosure relates to the technical field of communications, and particularly to, a communication method, apparatus and device, a chip, and a storage medium.

### BACKGROUND

In the related art, a network device can acquire an optimal serving beam, so that beam indication is used to cause a terminal device to switch its serving beam. In the process of acquiring the optimal serving beam, the network device can configure the terminal device to perform beam measurement and reporting. However, in the case of frequent configuration by the network device, relatively large reporting overhead and configuration overhead will be caused; in the case of relatively infrequent configuration by the network device, the terminal device cannot measure and report the beam in time, thus delaying switching of the serving beam by the terminal device.

Furthermore, only after a beam failure occurs, can the terminal device have an opportunity to actively switch the serving beam through a beam failure recovery mechanism, which obviously delays the switching of the serving beam.

### SUMMARY

The disclosure provides a communication method, apparatus and device, a chip and a storage medium.

In a first aspect, the communication method provided by the disclosure includes an operation as follows.

In a case where a first event meets a preset condition, the first event is sent to a network device on a first Physical Uplink Control Channel (PUCCH) resource or a first Physical Uplink Shared Channel (PUSCH) resource. The first event is used by the network device to determine a first serving spatial filter for a first time period.

In a second aspect, the communication method provided by the disclosure includes an operation as follows.

A first event sent by a terminal device is received on a first PUCCH resource or a first PUSCH resource. The first event meets a preset condition, and the first event is used by the network device to determine a first serving space filter for a first time period.

In a third aspect, the communication apparatus provided by the disclosure is applied to a terminal device, and the apparatus comprises a first sending unit.

The first sending unit is configured to, in a case where a first event meets a preset condition, send the first event to a network device on a first PUCCH resource or a first PUSCH resource. The first event is used by the network device to determine a first serving spatial filter for a first time period.

In a fourth aspect, the communication apparatus provided by the disclosure is applied to a network device, and the apparatus comprises a second receiving unit.

The second receiving unit is configured to receive, on a first PUCCH resource or a first PUSCH resource, a first event sent by a terminal device. The first event meets a preset condition, and the first event is used by the network device to determine a first serving spatial filter for a first time period.

In a fifth aspect, the communication device provided by the disclosure includes a memory, a processor, and a transceiver. The memory is configured to store a computer program; the processor, connected to the memory, is configured to invoke and execute the computer program from the memory to perform the method of the first aspect or the second aspect; and the transceiver is configured to receive and send information in the process of sending and receiving the information to or from another external device.

In a sixth aspect, the chip provided by the disclosure comprises a memory, a processor, and a transceiver. The memory is configured to store a computer program; the processor, connected to the memory, is configured to invoke and execute the computer program from the memory to cause a device mounted with the chip to perform the method of the first aspect or the second aspect; and the transceiver is configured to receive and send information in the process of sending and receiving the information to or from the device or chip.

In a seventh aspect, the computer storage medium provided by the disclosure has stored thereon a computer program that, when executed by at least one processor, implements the method of the first aspect or the second aspect.

In an eighth aspect, the computer program product provided by the disclosure includes computer programs or instructions that, when executed by a processor, implement the method of the first aspect or the second aspect.

In a ninth aspect, the computer program provided by the disclosure causes a computer to perform the method of the first aspect or the second aspect.

The disclosure provides a communication method. In a case where a first event meets a preset condition, the terminal device can send the first event to a network device on a first PUCCH resource or a first PUSCH resource. The first event is used by the network device to determine a first serving spatial filter for a first time period. Thus, after determining that the first event meets the preset condition, the terminal device may carry the report of the first event through the first PUCCH resource or the first PUSCH resource. In this way, the terminal device can actively report the first event, thereby reducing both the reporting overhead and the configuration overhead without delaying the switching of the serving spatial filter.

### BRIEF DESCRIPTION OF THE DRAWINGS

The accompanying drawings described herein are intended to provide a further understanding of the disclosure, and constitute a part of the disclosure, and the schematic embodiments of the disclosure and the description thereof are intended to explain the disclosure, and do not constitute an undue limitation of the disclosure. In the drawings:
FIG. 1 is a schematic diagram of a communication architecture.
FIG. 2 is a schematic flowchart of a communication method according to an embodiment of the disclosure.
FIG. 3 is a schematic diagram of a scenario including a serving spatial filter and a candidate spatial filter according to an embodiment of the disclosure.
FIG. 4 is a first schematic diagram of a scenario where a link quality fluctuates according to an embodiment of the disclosure.
FIG. 5 is a second schematic diagram of a scenario where a link quality fluctuates according to an embodiment of the disclosure.
FIG. 6 is a first detailed schematic flowchart of a communication method according to an embodiment of the disclosure.
FIG. 7 is a second detailed schematic flowchart of a communication method according to an embodiment of the disclosure.
FIG. 8 is a third detailed schematic flowchart of a communication method according to an embodiment of the disclosure.
FIG. 9 is a fourth detailed schematic flowchart of a communication method according to an embodiment of the disclosure.
FIG. 10 is a fifth detailed schematic flowchart of a communication method according to an embodiment of the disclosure.
FIG. 11 is a sixth detailed schematic flowchart of a communication method according to an embodiment of the disclosure.
FIG. 12 is a schematic flowchart of requesting resource allocation based on a 4-step RACH procedure according to an embodiment of the disclosure.
FIG. 13 is a schematic flowchart of requesting resource allocation based on a 2-step RACH procedure according to an embodiment of the disclosure.
FIG. 14 is a first schematic structural diagram of a communication apparatus 1400 according to an embodiment of the disclosure.
FIG. 15 is a first schematic structural diagram of a communication apparatus 1500 according to an embodiment of the disclosure.
FIG. 16 is a schematic structural diagram of a communication device according to an embodiment of the disclosure.
FIG. 17 is a schematic structural diagram of a chip according to an embodiment of the disclosure.
FIG. 18 is a schematic block diagram of a communication system according to an embodiment of the disclosure.

### DETAILED DESCRIPTION

Hereinafter, the technical solutions in the embodiments of the disclosure will be described with reference to the accompanying drawings in the embodiments of the disclosure, and it is apparent that the described embodiments are part of the embodiments of the disclosure, but not all the embodiments. Based on the embodiments in the disclosure, all other embodiments obtained by those skilled in the art without creative efforts fall within the scope of protection of the disclosure.

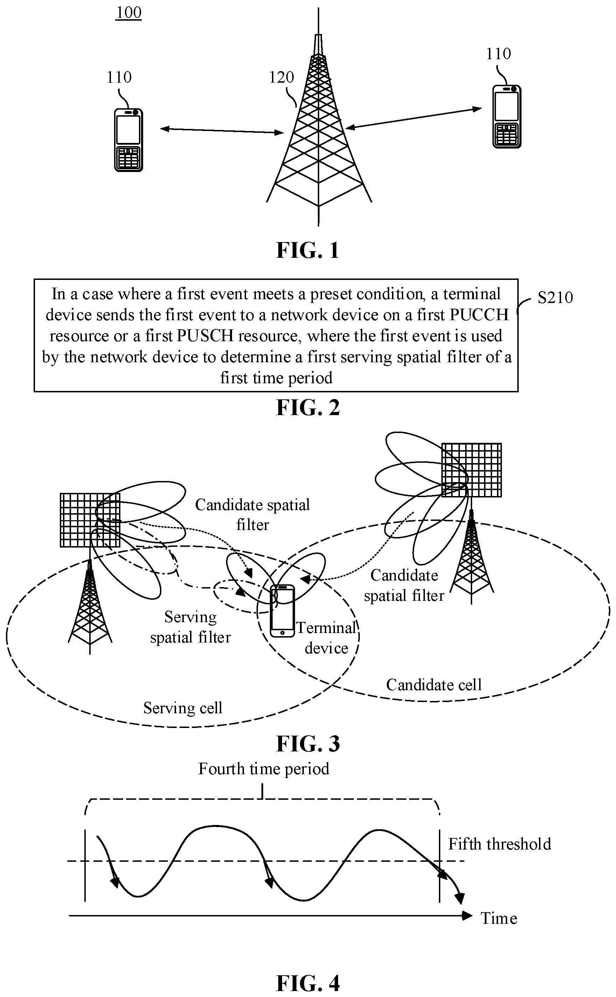

FIG. 1 is a schematic diagram showing an application scenario according to an embodiment of the disclosure.

As shown in FIG. 1, the communication system 100 includes a terminal device 110 and a network device (NW) 120. The network device 120 may communicate with the terminal device 110 through an air interface. Multi-service transmission is supported between the terminal device 110 and the network device 120.

It is to be understood that the embodiments of the present disclosure are illustrative only with the communication system 100 but are not limited thereto. That is, the technical solutions of the embodiments of the present disclosure may be applied to various communication systems, for example, a Long Term Evolution (LTE) system, an LTE Time Division Duplex (TDD), a Universal Mobile Telecommunications System (UMTS), an Internet of Things (IoT) system, a Narrow Band Internet of Things (NB-IoT) system, an enhanced Machine-Type Communications (eMTC) system, a 5G communication system (also called a New Radio (NR) communication system), or a future communication system, etc.

In the communication system 100 illustrated in FIG. 1, the network devices 120 may be an access network device communicating with the terminal device 110. The access network device may provide communication coverage for a particular geographic area and may communicate with the terminal device 110 located within a coverage area.

The network device 120 may be an Evolutionary Node B (eNB or eNodeB) in an LTE system, or a Next Generation Radio Access Network (NG RAN) device, or a base station (gNB) in an NR system, or a wireless controller in a Cloud Radio Access Network (CRAN); or the network device 120 may be a relay station, an access point, an in-vehicle device, a wearable device, a hub, a switch, a bridge, a router, or a network device in a future evolving Public Land Mobile Network (PLMN).

The terminal device 110 may be any terminal device including but not limited to a terminal device in wired or wireless connection with the network device 120 or other terminal devices.

For example, the terminal device 110 may refer to an access terminal, a User Equipment (UE), a user unit, a user station, a mobile station, a remote station, a remote terminal, a mobile device, a user terminal, a terminal device, a wireless communication device, a user agent or a user apparatus. The access terminal may be a cellular telephone, a cordless telephone, a Session Initiation Protocol (SIP) telephone, an Internet of Things (IoT) device, a satellite handheld terminal, a Wireless Local Loop (WLL) station, a Personal Digital Assistant (PDA), a handheld device with wireless communication functionality, a computing device or other processing device connected to a wireless modem, a vehicle-mounted device, a wearable device, a terminal device in a 5G network or a terminal device in a future evolution network, or the like.

The terminal device may be used for Device to Device (D2D) communication.

FIG. 1 exemplarily illustrates one network device and two terminal devices. Optionally, the communication system 100 may include multiple network devices, and other numbers of terminal devices may be included within the coverage of each network device, which is not limited by the embodiments of the present disclosure.

It is to be noted that FIG. 1 is only illustrative of the system to which the present disclosure is applied, and of course, the method illustrated in the embodiments of the present disclosure can also be applied to other systems. In addition, the terms "system" and "network" are often used interchangeably herein.

It is to be noted that the term "and/or" herein is only an association relationship describing associated objects and represents that three relationships may exist. For example, A and/or B may represent three conditions: i.e., independent existence of A, existence of both A and B and independent existence of B. In addition, the character "/" in the present disclosure generally indicates that the relationship between the related objects is "or".

It should be further understood that the "indication" mentioned in the embodiments of the present disclosure may be a direct indication, may be an indirect indication, or may be indicative of an association. For example, A indicates B, which may mean that A directly indicates B, for example, B may be obtained through A; it may also mean that A indirectly indicates B, for example, A indicates C, and B may be obtained by C; and it may also indicate that there is an association between A and B.

It should be further understood that the term "correspond" mentioned in the embodiments of the present disclosure may mean that there is a direct correspondence or an indirect correspondence between two items, may also mean that there is an association relationship between the two items, and may also be a relationship such as indication and being indicated, configuration and being configured, etc.

It should be further understood that the "pre-defined" or "pre-defined rule" mentioned in the embodiments of the present disclosure may be achieved by pre-storing corresponding codes, tables or other means used for indicating relevant information in devices (e.g., including terminal devices and network devices), and the specific implementation thereof is not limited in the present disclosure. For example, "pre-defined" may refer to what is defined in a protocol. It should be further understood that in the embodiments of the present disclosure, the "protocol" may be a standard protocol in the communication field. For example, the protocol may include an LTE protocol, an NR protocol, and related protocols applied in future communication systems, which are not limited in the present disclosure.

In order to facilitate understanding of the technical solutions of the embodiments of the disclosure, the related technologies of the embodiments of the disclosure will be described below, and the related technologies below, as optional solutions, can be arbitrarily combined with the technical solutions of the embodiments of the disclosure, and all combinations thereof belong to the scope of protection of the embodiments of the disclosure.

It is to be noted that a "beam (pair)" in the embodiments of the present disclosure may refer to a beam, including a transmitting beam or a receiving beam, or may refer to a pair of beams, such as a pair of a transmitting beam and a receiving beam. The meaning of "beam (pair)" may be applied to both a case of uplink transmission and a case of downlink transmission. In the embodiments of the present disclosure, the "beam (pair)" may also be referred to as a spatial filter.

The beam management mainly includes measuring and reporting the beam by the terminal device, and indicating the beam by the network device according to the report of the terminal device, so that the terminal device can perform beam switching.

It is to be noted that the beam measurement may measure periodic, semi-persistent, and aperiodic downlink reference signal(s).

Exemplarily, the downlink reference signal may be a Channel State Information-Reference Signal (CSI-RS) or a Synchronization Signal and PBCH Block (SSB).

The beam reporting is associated with an uplink resource.

Exemplarily, the beam reporting may be a periodic reporting, such as beam reporting using Physical Uplink Control Channel (PUCCH) resources.

Exemplarily, the beam reporting may be a semi-persistent reporting, such as reporting using PUCCH resources or Physical Uplink Shared Channel (PUSCH) resources, and the semi-persistent reporting may be activated or deactivated using a Media Access Control-Control Element (MAC CE).

Exemplarily, the beam reporting may be an aperiodic reporting, such as reporting using PUSCH resources, and the aperiodic reporting may be triggered based on Downlink Control Information (DCI) signaling sent by the network device.

It is to be noted that when the network device obtains beam reporting from the terminal device, the network device may perform beam indication to the terminal device.

Exemplarily, the network device may indicate to the terminal device a Transmission Configuration Indication (TCI) State, i.e. indicating a single Transmit Reception Point (TRP). Alternatively, the network device may indicate to the terminal device a set of TCI States, i.e. Indicating multiple TRPs.

It should be understood that the TCI state may be a Legacy TCI in R15 or R16, or may be a unified TCI state defined by R17 and extended by R18. It will be appreciated that either type of TCI state may contain a downlink reference signal (suitable for downlink and uplink transmissions) or an uplink reference signal (suitable for uplink transmissions). The QCL Type of the reference signal is the Type D, which can be used to indicate a Quasi Co-Location (QCL) relationship, that is, a beam relationship, between different reference signals.

It is to be noted that the beam management mechanism in the related art is based on configuration, activation, and/or indication of the network device. That is, it is necessary for the terminal device to measure and report the beam based on the configuration of the network device. That is, although the terminal device itself can find a problem such as a link quality degradation of the downlink beam, it cannot report it in a timely and active manner.

Furthermore, only after a beam failure occurs, can the terminal device have an opportunity to actively switch the serving beam through a beam failure recovery mechanism, which obviously delays the time for the terminal device to switch its serving beam.

Hereinafter, Uplink Control Information (UCI) and the PUCCH in the NR will be briefly described.

The UCI may be carried by a PUCCH resource or a PUSCH resource. The UCI may include one or more of the following elements:
(1) Acknowledgment (ACK) /Negative Acknowledgment (NACK), which is used to acknowledge or not acknowledge the reception of downlink data;
(2) Scheduling Request (SR), which represents a Request for an uplink resource; and
(3) Channel State Information (CSI), which is used to provide feedback on the channel quality.

It is to be noted that the above-described one or more elements may be combined and transmitted in a plurality of ways, and fed back to the network device through an uplink channel.

It is to be further noted that although both the PUCCH resource and the PUSCH resource may carry one or more elements of the UCI, the UCI containing the SR is typically carried by the PUCCH resource.

The 3rd Generation Partnership Project (3GPP) stipulates five different PUCCH formats (formats 0, 1, 2, 3, 4), and these formats can be classified according to the allocation method of time-frequency resources (i.e. physical resources), the number of bits carried, and other factors.

Here, the number of bits of the UCI carried by the time-frequency resource occupied by PUCCH format 0 or 1 is less than or equal to 2, while the number of bits of the UCI carried by the time-frequency resource occupied by PUCCH format 2, 3 or 4 is greater than 2.

The PUCCH formats 0 and 2 can be called a short PUCCH, and the length of the short PUCCH is 1 to 2 Orthogonal Frequency Division Multiplexing (OFDM) symbols. The PUCCH formats 1, 3, and 4 can be called a long PUCCH, and the length of the long PUCCH can reach 4 to 14 OFDM symbols.

It is to be noted that the PUCCH resources may include PUCCH resource sets and one or more PUCCH resources in each PUCCH resource set. The network device may generally configure, for the terminal device, one or more PUCCH resource sets and one or more PUCCH resources in each resource set. Which PUCCH resource set the terminal device uses for transmission is mainly based on the number of UCI bits to be carried, and which PUCCH resource (resource ID) to use in the selected PUCCH resource set is determined by the DCI 1_x.

It is to be further noted that the number of bits of the UCI carried by the time-frequency resource occupied by the short PUCCH is at most 2, and is selected based on the sequence. In the time-frequency resource occupied by the short PUCCH in which the number of UCI bits carried exceeds 2, the UCI and the Demodulation Reference Signal (DMRS) need to be frequency multiplexed.

It is to be further noted that the UCI carried by the time-frequency resource occupied by the long PUCCH needs to be time multiplexed with the DMRS. The long PUCCH supports frequency hopping, and the short PUCCH with duration of 2 OFDM symbols also supports frequency hopping. The long PUCCH may be repeated over multiple time slots.

It will be appreciated that a payload size of part of the PUCCH resources is relatively small, e.g. not exceeding 2 bits. A payload size of part of the PUCCH resources is relatively large, and for example, they can carry a CSI report, including a beam management event report.

In the related art, a network device can acquire an optimal serving beam, so that beam indication is used to cause a terminal device to switch its serving beam. On one hand, if the network device configures (e.g., indicates or activates by signaling) frequent periodic or semi-persistent beam reporting (e.g., optimal N beams and their corresponding Layer 1-Reference Signal Receiving Power (L1-RSRP)), or triggers frequent aperiodic beam reporting, relatively large reporting overhead and configuration overhead will be resulted. On the other hand, if the beam reporting configured by the network device is relatively infrequent, the beam reporting from the terminal device may be obsolete, so that the network device persistently fails to obtain the optimal or preferred serving beam, and the switching of the serving beam by the terminal device is delayed, thereby resulting in performance degradation.

Furthermore, only after a beam failure occurs, can the terminal device have an opportunity to actively switch the serving beam through a beam failure recovery mechanism, which obviously delays the switching of the serving beam.

Based on this, an embodiment of the disclosure provides a communication method. In a case where a first event meets a preset condition, the terminal device can send the first event to a network device on a first PUCCH resource or a first PUSCH resource. The first event is used by the network device to determine a first serving spatial filter for a first time period. Thus, after determining that the first event meets the preset condition, the terminal device may carry the report of the first event through the first PUCCH resource or the first PUSCH resource. In this way, the terminal device can actively report the first event, thereby reducing both the reporting overhead and the configuration overhead without delaying the switching of the serving spatial filter.

In order to facilitate understanding of the technical solutions of the embodiments of the disclosure, the technical solutions of the disclosure will be described in detail below with reference to specific examples. As optional solutions, the above related technologies can be arbitrarily combined with the technical solutions of the embodiments of the disclosure, and all combinations thereof belong to the scope of protection of the embodiments of the disclosure. Embodiments of the disclosure include at least some of the following contents.

FIG. 2 is a schematic flowchart of a communication method according to an embodiment of the disclosure. As shown in FIG. 2, the method includes an operation S210.

In the operation S210, in a case where a first event meets a preset condition, the terminal device sends the first event to a network device on a first PUCCH resource or a first PUSCH resource, the first event being used by the network device to determine a first serving spatial filter for a first time period.

Accordingly, the network device may receive, on the first PUCCH resource or the first PUSCH resource, the first event sent by the terminal device.

Exemplarily, the PUSCH resource may be a time-frequency resource occupied by a PUSCH scheduled by uplink DCI, a time-frequency resource occupied by a Type 1 configured Grant (CG) -PUSCH configured by Radio Resource Control (RRC), or a time-frequency resource occupied by a Type 2 CG-PUSCH configured by RRC or activated by DCI. The disclosure is not limited thereto.

Exemplarily, the first event may be a spatial filter (i.e., beam) management event.

It is to be noted that the operation of the terminal device sending the first event to the network device can be understood as the terminal device sending a spatial filter management event to the network device. That is, the terminal device performs spatial filter reporting (i.e., sending) to the network device.

It is to be further noted that the first time period may be a period of time after the current time. That is, the first time period may be a future time period. The first serving spatial filter may be a serving spatial filter used by the terminal device for a period of time after the current time.

It is to be noted that since the terminal device can more accurately and timely determine whether or not the first event meets the preset condition (such as whether or not the link quality of the spatial filter changes), the spatial filter reporting process initiated by the terminal device (i.e.,, the terminal device sends the first event) can enable more timely spatial filter reporting, and can reduce reporting overhead and configuration overhead. For example, in a case where the terminal device determines that the quality of the serving spatial filter at the current time is deteriorated, the terminal device may actively trigger the spatial filter reporting (that is, actively send the first event) without configuration by the network device (for example, the network device frequently triggers the spatial filter reporting), so that the switching of the serving spatial filter can be performed more timely.

It is to be understood that in a case where the first event does not meet the preset condition, the terminal device may not send the first event to the network device, and the configuration by the network device is also not required, thereby further saving the reporting overhead and the configuration overhead.

In the related art, the terminal device sends the first event to the network device with certain randomness. In the embodiment of the disclosure, in the case where the terminal device determines that the first event meets the preset condition, the terminal device may send the first event to the network device, so that the terminal device can switch the serving spatial filter in time subsequently.

In some embodiments, the method may further include that the network device may send a TCI state to the terminal device, the TCI state being related to the first serving spatial filter.

Accordingly, the terminal device may receive the TCI state sent by the network device.

It is to be noted that the TCI state may be a Legacy TCI in R15 or R16, a unified TCI state defined by R17 and extended by R18, or another TCI state. The embodiments of the disclosure are not limited thereto.

It should also be noted that the TCI state may include a reference signal, and after receiving the TCI state, the terminal device may determine a first serving spatial filter associated with the reference signal based on the reference signal in the TCI state, so as to be able to switch to the first serving spatial filter. The embodiments of the disclosure are not limited thereto.

Exemplarily, the reference signal may be a CSI-RS or an SSB.

For example, in performing spatial filter reporting (i.e., the terminal device sends the first event), the terminal device may report an index of a reference signal resource (such as a CSI-RS resource or an SSB resource) corresponding to a candidate spatial filter, the index of the reference signal resource may be associated with a unified TCI state, and the unified TCI state may include the reference signal (which is implemented by the RRC configuration by the network device). After completing the spatial filter reporting, the terminal device expects beam indication information from the network device. The network device may indicate the unified TCI state to the terminal device through DCI signaling or MAC CE signaling.

In a case where the reference signal is an uplink reference signal, the unified TCI state may be associated with an uplink Timing Advance Group (TAG) corresponding to a Timing Advance (TA) value. Additionally, the unified TCI state may be associated with a set of uplink power control parameters, which may include a target open-loop receiver power P0, a fractional path loss compensation factor Alpha, a Closed-loop Power control Index (CLI), and a Path Loss Reference Signal (PL RS).

In a case where the reference signal is a downlink reference signal, the reported index of the reference signal resource (such as a Channel state information-Reference signal resource Indicator (CRI)) may be associated with a set of Channel State Information (CSI), which includes information such as a Precoding Matrix Indicator (PMI), a Rank Indicator (RI), a Channel Quality Indicator (CQI), and the like. That is, the reported index of the reference signal resource may be associated with CSI on one or more spatial filters.

With the method, the network device can send the TCI state to the terminal device, so that after receiving the TCI state, the terminal device can determine the first serving spatial filter related to the TCI state, and can switch to the first serving spatial filter in time.

In some embodiments, the first event may include one or more of:
an index of a reference signal resource corresponding to a second serving spatial filter;
a link quality of the reference signal resource corresponding to the second serving spatial filter;
an index of a reference signal resource corresponding to a candidate spatial filter;
a link quality of the reference signal resource corresponding to the candidate spatial filter;
a fluctuation range of the link quality of the reference signal resource corresponding to the second serving spatial filter; and
an interference intensity of the candidate spatial filter to the second serving spatial filter,
where the second serving spatial filter is a serving spatial filter for a third time period, and an end time of the third time period is earlier than a start time of the first time period.

Exemplarily, the candidate spatial filter and the serving spatial filter (e.g., the second serving spatial filter) may each correspond to one reference signal resource.

It is to be noted that the third time period may be a current time and/or a period of time prior to the current time. The second serving spatial filter may be a serving spatial filter used by the terminal device at the current time and/or in the period of time prior to the current time.

Further, the second serving spatial filter and the first serving spatial filter may be the same space filter or different space filters. The embodiments of the disclosure are not limited thereto.

It is to be noted that the link quality can be measured using metrics of the physical layer. The link quality may include Reference Signal Received Power (RSRP) (e.g., L1-RSRP), Signal to interference plus noise ratio (SINR) (such as L1-SINR), Received Signal Strength Indicator (RSSI) (such as L1-RSSI), Reference Signal Received Quality (RSRQ) (such as L1-RSRQ), or Block Error Rate (BLER) of a Physical Downlink Control Channel (PDCCH).

Further, link quality can also be used as an input and an output of an Artificial Intelligence (AI) /Machine Learning (ML) model.

For example, for the BLER of the PDCCH, the terminal device may convert the L1-SINR into the BLER of the PDCCH according to the definition in the protocol. In general, when the BLER of the PDCCH is higher than 1%, it is considered that the link quality is poor and needs to be adjusted.

It is to be further noted that the candidate spatial filter belongs to a serving cell and/or a candidate cell.

It is to be understood that in the embodiment of the disclosure, the serving spatial filter (for example, the first serving spatial filter, and for another example, the second serving spatial filter) belongs to the serving cell. The candidate spatial filter may belong to the serving cell or the candidate cell, and the embodiments of the disclosure are not limited thereto.

Exemplarily, the index of the candidate cell may be represented using a Physical Cell Identity (PCI).

FIG. 3 is a schematic diagram of a scenario including a serving spatial filter and a candidate spatial filter according to an embodiment of the disclosure. As shown in FIG. 3, in the serving cell, there may be a serving spatial filter, and may also be a candidate spatial filter; and in the candidate cell, there may be a candidate spatial filter.

It is to be noted that the NR supports an inter-cell beam management mechanism in R17, that is, a candidate spatial filter of a candidate cell may be switched to a serving spatial filter. That is, when the terminal device performs switching of the serving spatial filter, the terminal device may switch the candidate spatial filter in the serving cell to the serving spatial filter, and may also switch the candidate spatial filter in the candidate cell to the serving spatial filter. The embodiments of the disclosure are not limited thereto.

With the method, the terminal device can actively report the first event, and when the second serving spatial filter and the first serving spatial filter are the same space filter, the reporting overhead and the configuration overhead can be reduced. When the second serving spatial filter and the first serving spatial filter are different spatial filters, the reporting overhead and the configuration overhead can be reduced without delaying the switching of the serving spatial filter by the terminal device (switching from the second serving spatial filter to the first serving spatial filter).

In some embodiments, the fluctuation range of the link quality of the reference signal resource corresponding to the second serving spatial filter is: a number of times that the link quality of the reference signal resource corresponding to the second serving spatial filter fluctuates upward or downward at a fifth threshold in a fourth time period.

Herein, an end time of the fourth time period is earlier than a start time of the first time period.

It is to be noted that the fourth time period may be a current time and/or a period of time prior to the current time.

It is to be further noted that the fourth time period and the third time period may be the same time period, and the fourth time period and the third time period may be different time periods. The embodiments of the disclosure are not limited thereto.

It is to be further noted that the number of times that the link quality fluctuates upward at the fifth threshold may be understood as a number of times that the link quality crosses the fifth threshold from below to above; and the number of times that the link quality fluctuates downward at the fifth threshold may be understood as a number of times that the link quality crosses the fifth threshold from above to below.

It is to be understood that the fifth threshold may be a parameter value predefined by the protocol, or may be a parameter value set by another manner, and the embodiments of the disclosure are not limited thereto.

FIG. 4 is a first schematic diagram of a scenario where a link quality fluctuates according to an embodiment of the disclosure. As shown in FIG. 4, in the fourth time period, the number of times that the link quality of the reference signal resource corresponding to the second serving spatial filter fluctuates upward or downward at a fifth threshold is two or three times respectively, thus the fluctuation range of the link quality of the reference signal resource corresponding to the second serving spatial filter is two or three times.

In some embodiments, the fluctuation range of the link quality of the reference signal resource corresponding to the second serving spatial filter is:
a duration for which the link quality of the reference signal resource corresponding to the second serving spatial filter is higher than or less than a sixth threshold in a fifth time period; or,
a ratio of the duration for which the link quality of the reference signal resource corresponding to the second serving spatial filter is higher than or less than the sixth threshold to the fifth time period.

Herein, an end time of the fifth time period is earlier than a start time of the first time period.

It is to be noted that the fifth time period may be a current time and/or a period of time prior to the current time.

It is to be further noted that the fifth time period, the third time period and the fourth time period may be the same time period, and the fifth time period, the third time period and the fourth time period may also be different time periods. The embodiments of the disclosure are not limited thereto.

It is to be understood that the sixth threshold may be a parameter value predefined by the protocol, or may be a parameter value set by another manner, and the embodiments of the disclosure are not limited thereto.

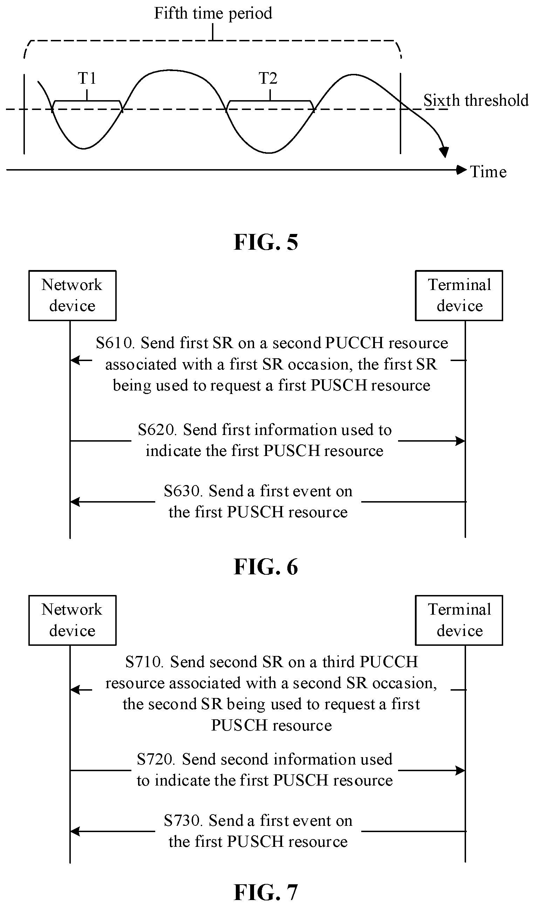

FIG. 5 is a second schematic diagram of a scenario where a link quality fluctuates according to an embodiment of the disclosure. As shown in FIG. 5, in the fifth time period, the duration for which the link quality of the reference signal resource corresponding to the second serving spatial filter is less than the sixth threshold is T1+T2, thus the fluctuation range of the link quality of the reference signal resource corresponding to the second serving spatial filter is: T1+T2, or (T1+T2) / the fifth time period.

It is to be understood that the exemplary description when the link quality of the reference signal resource corresponding to the second serving spatial filter is higher than the sixth threshold is similar to the exemplary description when the link quality is less than the sixth threshold, and will not be repeated here.

In some embodiments, the preset condition may include one or more of:
a link quality of a reference signal resource corresponding to a second serving spatial filter is greater than a second threshold;
the link quality of the reference signal resource corresponding to the second serving spatial filter is less than or equal to the second threshold;
a link quality of a reference signal resource corresponding to a candidate spatial filter is greater than the link quality of the reference signal resource corresponding to the second serving spatial filter plus an offset value;
the link quality of the reference signal resource corresponding to the candidate spatial filter is greater than a third threshold;
the link quality of the reference signal resource corresponding to the second serving spatial filter is less than or equal to the second threshold, and the link quality of the reference signal resource corresponding to the candidate spatial filter is greater than the third threshold;
a fluctuation range of the link quality of the reference signal resource corresponding to the second serving spatial filter exceeds a preset range; and
an interference intensity of the candidate spatial filter to the second serving spatial filter is greater than a fourth threshold,
where the second serving spatial filter is a serving spatial filter for a third time period, and an end time of the third time period is earlier than a start time of the first time period.

It is to be understood that the second threshold may be a parameter value predefined by the protocol, or may be a parameter value set by another manner, and the embodiments of the disclosure are not limited thereto.

It is to be further understood that the third threshold may be a parameter value predefined by the protocol, or may be a parameter value set by another manner, and the embodiments of the disclosure are not limited thereto.

It is to be further understood that the fourth threshold may be a parameter value predefined by the protocol, or may be a parameter value set by another manner, and the embodiments of the disclosure are not limited thereto.

It is to be understood that the offset value may be a parameter value predefined by the protocol, or may be a parameter value set by another manner, and the embodiments of the disclosure are not limited thereto.

It is to be noted that the second serving spatial filter is the same as the first serving spatial filter, in a case where the preset condition comprises that the link quality of the reference signal resource corresponding to the second serving spatial filter is greater than the second threshold.

That is, in a case where the link quality of the reference signal resource corresponding to the second serving spatial filter is greater than the second threshold, the terminal device does not need to switch the second serving spatial filter.

Exemplarily, in the case where the link quality of the reference signal resource corresponding to the second serving spatial filter is greater than the second threshold, it is indicated that the first event meets the preset condition, and reporting of the first event may be triggered in this case. After receiving the first event, the network device may learn that the terminal device does not need to switch the second serving spatial filter, thus may not indicate the spatial filter (such as not sending the TCI state), thereby reducing the reporting overhead and the configuration overhead.

Exemplarily, in a case where the link quality of the reference signal resource corresponding to the second serving spatial filter is less than or equal to the second threshold, it is indicated that the first event meets the preset condition, and reporting of the first event may be triggered in this case. After receiving the first event, the network device can learn that the terminal device needs to switch the second serving spatial filter, thus subsequently indicate the spatial filter (such as sending the TCI state) in time, so that the reporting overhead and configuration overhead are reduced without delaying the switching of the serving spatial filter (switching from the second serving spatial filter to the first serving spatial filter) by the terminal device.

Exemplarily, in a case where the link quality of the reference signal resource corresponding to the candidate spatial filter is greater than the link quality of the reference signal resource corresponding to the second serving spatial filter plus the offset value, it is indicated that the first event meets the preset condition, and reporting of the first event can be triggered in this case. After receiving the first event, the network device can learn that the terminal device needs to switch the second serving spatial filter, thus subsequently indicate the spatial filter (such as sending the TCI state) in time, so that the reporting overhead and configuration overhead are reduced without delaying the switching of the serving spatial filter (switching from the second serving spatial filter to the first serving spatial filter) by the terminal device.

It is to be noted that the fluctuation range of the link quality of the reference signal resource corresponding to the second serving spatial filter exceeding the preset range may be understood as:
the number of times that the link quality of the reference signal resource corresponding to the second serving spatial filter fluctuates upward or downward at the fifth threshold in the fourth time period exceeds a preset number of times; or
the duration for which the link quality of the reference signal resource corresponding to the second serving spatial filter is higher than or less than the sixth threshold in the fifth time period exceeds a preset duration; or,
the ratio of the duration, for which the link quality of the reference signal resource corresponding to the second serving spatial filter is higher than or less than the sixth threshold in the fifth time period, to the fifth time period exceeds a preset ratio.

For example, as shown in FIG. 4, in the fourth time period, the number of times that the link quality fluctuates downward at the fifth threshold is three times, and assuming that a preset number of times that the link quality fluctuates downward at the fifth threshold is two times, then it is indicated that the fluctuation range of the link quality of the reference signal resource corresponding to the second serving spatial filter exceeds the preset range.

Exemplarily, as shown in FIG. 5, in the fifth time period, the duration for which the link quality is less than the sixth threshold is T1+T2, and assuming that a preset duration for which the link quality is less than the sixth threshold is less than T1+T2, then it is indicated that the fluctuation range of the link quality of the reference signal resource corresponding to the second serving spatial filter exceeds the preset range.

With the method, in a case where the first event meets the preset condition, the terminal device can actively report the first event, and when the second serving spatial filter and the first serving spatial filter are the same space filter, the reporting overhead and the configuration overhead can be reduced. When the second serving spatial filter and the first serving spatial filter are different spatial filters, the reporting overhead and the configuration overhead can be reduced without delaying the switching of the serving spatial filter by the terminal device (switching from the second serving spatial filter to the first serving spatial filter).

The embodiment of the disclosure provides a communication method. In a case where a first event meets a preset condition, the terminal device can send the first event to a network device on a first PUCCH resource or a first PUSCH resource. The first event is used by the network device to determine a first serving spatial filter for a first time period. Thus, after determining that the first event meets the preset condition, the terminal device may carry the report of the first event through the first PUCCH resource or the first PUSCH resource. In this way, the terminal device can actively report the first event, thereby reducing both the reporting overhead and the configuration overhead without delaying the switching of the serving spatial filter.

In the embodiment of the disclosure, before sending the first event, the terminal device needs to obtain the first PUSCH resource or the first PUCCH resource to carry the report of the first event. Assuming that the terminal device does not have the first PUSCH resource or the first PUCCH resource allocated in advance within a certain time window, the network device needs to accurately indicate the first PUSCH resource or the first PUCCH resource to carry the transmission of the first event. The network device may indicate the first PUSCH resource or the first PUCCH resource based on one or more of the following manners.

In a manner #A, the terminal device may request the first PUSCH resource based on a first SR, so as to carry the report of the first event based on the first PUSCH resource.

FIG. 6 is a first detailed schematic flowchart of a communication method according to an embodiment of the disclosure. As shown in FIG. 6, the detailed process may include the following operations.

In an operation S610, the terminal device sends a first SR to the network device on a second PUCCH resource associated with a first SR occasion, the first SR being used to request the first PUSCH resource.

In an operation S620, the network device sends first information to the terminal device, the first information being used to indicate the first PUSCH resource.

In an operation S630, the terminal device sends a first event to the network device on the first PUSCH resource.

Herein, the first event is used by the network device to determine a first serving spatial filter for the first time period.

It is to be noted that the terminal device sends the first SR to the network device, after the terminal device determines that the first event meets the preset condition, or before the terminal device determines that the first event meets the preset condition, and the embodiments of the disclosure are not limited thereto.

It is to be further noted that the second PUCCH is of a format that typically has a relatively small payload size (e.g., not exceeding 2 bits), and thus the second PUCCH resource cannot be used to carry the report of the first event.

It is to be further noted that in a case where the terminal device determines that the first event meets the preset condition, the terminal device sends the first event to the network device on the first PUSCH resource. That is to say, in the case where the terminal device determines that the first event meets the preset condition, the terminal device performs the operation S630.

In the related art, when the terminal device has an uplink transmission demand, the terminal device may send the SR to the network device to request the PUSCH resource. However, the contents carried by the PUSCH resource include higher layer data or an MAC CE of the Media Access Control (MAC) layer, and do not involve the bearing of the first event.

In the embodiment of the disclosure, the first SR may be used to request the first PUSCH resource, and the first PUSCH resource may be used to carry the report of the first event. It is to be understood that the first SR may have the following two possible implementations.

In one possible implementation, the first SR may be a conventional SR.

The first SR may include not only 1 bit of information, but also a type of information carried by the requested first PUSCH resource (for example, a first type of information, or a second type of information). That is to say, the first SR may include information of 2 bits or more.

For example, the 1-bit information of "0" indicates that no SR is initiated (i.e., a negative SR), and the 1-bit information of "1" indicates that an SR is initiated (i.e., a positive SR).

In some embodiments, the first SR may include three code points.

A first code point represents that no SR is initiated.

A second code point represents a first type of information carried by the first PUSCH resource, the first type of information comprising high-layer data or an MAC CE of an MAC layer.

A third code point represents a second type of information carried by the first PUSCH resource, the second type of information comprising the first event.

It is to be noted that in this case, the first SR may include information of 2 bits, the first code point may be "00", the second code point may be "01", and the third code point may be "10". In addition, the first SR may also include a fourth code point "11", which may be used as a reserved bit.

With the method, in a case where the first SR is a conventional SR, the first SR may include the type of information carried by the requested first PUSCH resource, so that the terminal device may request the first PUSCH resource from the network device through the first SR, so as to subsequently use the first PUSCH resource to carry the report of the first event.

In the other possible implementation, the first SR may be a special SR.

It is to be noted that the terminal device may send a special SR (that is, the first SR) to the network device on the second PUCCH resource associated with the first SR occasion.

Further, a particularity of the first SR is that the first SR is dedicated to requesting a first PUSCH resource capable of carrying the first event.

In some embodiments, the first SR is configured by RRC signaling.

Exemplarily, the first SR may be configured by the network device through RRC signaling, and is different from the SR used to request a PUSCH to carry higher layer data or MAC CE. The network device may configure the special SR (i.e., the first SR) capable of requesting the first PUSCH resource for carrying the first event.

In some embodiments, the first information may be carried by DCI signaling and/or MAC CE signaling.

Exemplarily, the network device may allocate the first PUSCH resource to the terminal device through DCI signaling and/or MAC CE signaling.

Exemplarily, the network device may indicate, through the DCI signaling, and/or activate, through the MAC CE signaling, a first PUSCH resource dedicated to the terminal device, and the terminal device may use the dedicated first PUSCH resource to carry the report of the first event.

Exemplarily, the network device may indicate, through the DCI signaling, and/or activate, through the MAC CE signaling, a common first PUSCH resource, and the terminal device may use the common first PUSCH resource to carry the report of the first event.

It is to be noted that in a case where the terminal device requests the first PUSCH resource using the first SR, the terminal device usually needs to wait for a periodic first SR occasion. If a period of the first SR occasion is configured to be too long, the first event may not be reported in time; and if the period of the first SR occasion is configured to be too short, a certain number of the second PUCCH resources need to be reserved. Based on this, when configuring the first SR, the network device should try to avoid the period of the first SR occasion being too long or too short, thereby enabling timely reporting of the first event and reducing excessive occupancy of the second PUCCH resources.

It is to be further noted that the network device may determine, according to the importance of different SRs, whether to allocate PUSCH resources to a certain terminal device. The reporting of the first event often involves a change of the link quality, and even a possible occurrence of a beam failure event. Therefore, when the first SR is used to request the first PUSCH resource, after receiving the first SR, the network device can consider the first PUSCH resource requested by the first SR to be more important.

With the manner #A, the terminal device may send the first SR to the network device, and the network device is caused to learn that the first PUSCH resource requested by the first SR is more important (that is, the first PUSCH resource indicated by the network device can carry the first event), thus the network device can indicate the first PUSCH resource to the terminal device in time. The terminal device may carry the report of the first event using the first PUSCH resource, thereby reducing the reporting overhead and the configuration overhead without delaying the switching of the serving spatial filter by the terminal device.

In a manner #B, the terminal device may request the first PUCCH resource based on a second SR, so as to carry the report of the first event based on the first PUCCH resource.

FIG. 7 is a second detailed schematic flowchart of a communication method according to an embodiment of the disclosure. As shown in FIG. 7, the detailed process may include the following operations.

In an operation S710, the terminal device sends a second SR to the network device on a third PUCCH resource associated with a second SR occasion, the second SR being used to request the first PUCCH resource.

In an operation S720, the network device sends second information to the terminal device, the second information being sued to indicate the first PUCCH resource.

In an operation S730, the terminal device sends a first event to the network device on the first PUCCH resource.

Herein, the first event is used by the network device to determine a first serving spatial filter for the first time period.

It is to be noted that the terminal device sends the second SR to the network device, after the terminal device determines that the first event meets the preset condition, or before the terminal device determines that the first event meets the preset condition, and the embodiments of the disclosure are not limited thereto.

It is to be further noted that the third PUCCH is of a format that typically has a relatively small payload size (for example, not exceeding 2 bits), and thus the third PUCCH resource cannot be used to carry the report of the first event. The first PUCCH resource requested by the second SR has a relatively large payload size (e.g., exceeding 2 bits), so that the first PUCCH resource can be used to carry the report of the first event.

Further, when the second SR occasion arrives, the terminal device may use the third PUCCH resource associated with the second SR occasion to request the first PUCCH resource. Since the payload size of the third PUCCH resource is insufficient to carry the report of the first event, the terminal device may send the second SR to the network device through the third PUCCH resource to request the first PUCCH resource to carry the report of the first event.

It is to be noted that in a case where the terminal device determines that the first event meets the preset condition, the terminal device sends the first event to the network device on the first PUCCH resource. That is to say, in the case where the terminal device determines that the first event meets the preset condition, the terminal device performs the operation S730.

In the related art, when the terminal device has an uplink transmission demand, the SR may be sent to the network device to request a PUSCH resource, and the contents carried by the PUSCH resource include high-layer data or an MAC CE of the MAC layer, and does not involve the bearing of the first event.

In the embodiment of the disclosure, the second SR may be used to request the first PUCCH resource, and the first PUCCH resource may be used to carry the report of the first event.

In some embodiments, the second SR may be a special SR.

It is to be noted that the terminal device may send a special SR (that is, the second SR) to the network device on the third PUCCH resource associated with the second SR occasion.

Further, a particularity of the second SR is that the second SR may be dedicated to requesting a first PUCCH resource for carrying the first event.

In some embodiments, the second SR is configured by RRC signaling.

Exemplarily, the second SR may be configured by the network device through RRC signaling, and is different from the SR used to request a PUSCH to carry higher layer data or MAC CE. The network device may configure the special SR (i.e., the second SR) capable of requesting the first PUCCH resource for carrying the first event.

In some embodiments, the second information may be carried by DCI signaling and/or MAC CE signaling.

Exemplarily, the network device may allocate the first PUCCH resource to the terminal device through DCI signaling and/or MAC CE signaling.

Exemplarily, the network device may indicate, through the DCI signaling, and/or activate, through the MAC CE signaling, a first PUCCH resource dedicated to the terminal device, and the terminal device may use the dedicated first PUCCH resource to carry the report of the first event.

Exemplarily, the network device may indicate, through the DCI signaling, and/or activate, through the MAC CE signaling, a common first PUCCH resource, and the terminal device may use the common first PUCCH resource to carry the report of the first event.

It is to be noted that in a case where the terminal device requests the first PUCCH resource using the second SR, the terminal device usually needs to wait for a periodic second SR occasion. If a period of the second SR occasion is configured to be too long, the first event may not be reported in time; and if the period of the second SR occasion is configured to be too short, a certain number of the third PUCCH resources need to be reserved. Based on this, when configuring the second SR, the network device should try to avoid the period of the second SR occasion being too long or too short, thereby enabling timely reporting of the first event and reducing excessive occupancy of the third PUCCH resources.

It is to be further noted that the reporting of the first event often involves a change of the link quality, and even a possible occurrence of a beam failure event. Therefore, when the second SR is used to request the first PUCCH resource, after receiving the second SR, the network device can consider the first PUCCH resource requested by the second SR to be more important.

With the manner #B, the terminal device may send the second SR to the network device, and the network device is caused to learn that the first PUCCH resource requested by the second SR is more important (that is, the first PUCCH resource indicated by the network device can carry the first event), thus the network device can indicate the first PUCCH resource to the terminal device in time. The terminal device may carry the report of the first event using the first PUCCH resource, thereby reducing the reporting overhead and the configuration overhead without delaying the switching of the serving spatial filter by the terminal device.

Further, the first PUCCH resource(s) may occupy a small number of uplink time-frequency resources, compared to the PUSCH resource(s). When the network device indicates the first PUCCH resource to the terminal device through the second information, the number of bits required for the second information is also small.

In a manner #C, the network device may pre-configure the first PUCCH resource or the first PUSCH resource.

In some embodiments, the first PUCCH resource or the first PUSCH resource is pre-configured.

Further, the first PUCCH resource or the first PUSCH resource is a common resource or a dedicated resource.

Exemplarily, the terminal device may carry the report of the first event based on the common first PUCCH resource or first PUSCH resource configured in advance. The configuration of the common first PUCCH resource or first PUSCH resource is characterized by a common attribute. That is to say, the common first PUCCH resource or first PUSCH resource is not exclusive to a certain terminal device, but a plurality of terminal devices may send information on the same first PUCCH resource or first PUSCH resource by multiplexing.

Exemplarily, the network device may configure a dedicated first PUCCH resource or first PUSCH resource for the terminal device in advance to carry the report of the first event.

Herein, the first event is used by the network device to determine a first serving spatial filter for the first time period.

It is to be understood that in a case where there are a plurality of terminal devices, if the first PUCCH resource(s) or first PUSCH resource(s) dedicated to the plurality of terminal devices do not support multi-user multiplexing, the network device may avoid mutual interference between the plurality of terminal devices by configuring different periods and/or offset amounts.

It is to be further understood that in a case where there are a plurality of terminal devices, and when the network device configures dedicated first PUCCH resources or first PUSCH resources for the plurality of terminal devices, there is no need for sharing resources between the plurality of terminal devices, and each terminal device has a dedicated resource.

Exemplarily, the network device may pre-configure the first PUCCH resource or the first PUSCH resource through RRC signaling. For example, the network device may pre-configure a plurality of periodic, semi-persistent, or aperiodic first PUCCH resources through RRC signaling. For another example, the network device may configure one or more Type 1 or Type 2 CG-PUSCH resources through RRC signaling.

In some embodiments, when the network device pre-configures the first PUCCH resource or the first PUSCH resource, and the number of the first PUCCH resources or the first PUSCH resources is multiple, the network device may indicate the first PUCCH resources or the first PUSCH resources for uplink transmission over a period of time, so that the terminal device can carry the report of the first event based on the first PUCCH resource or the first PUSCH resource for uplink transmission.

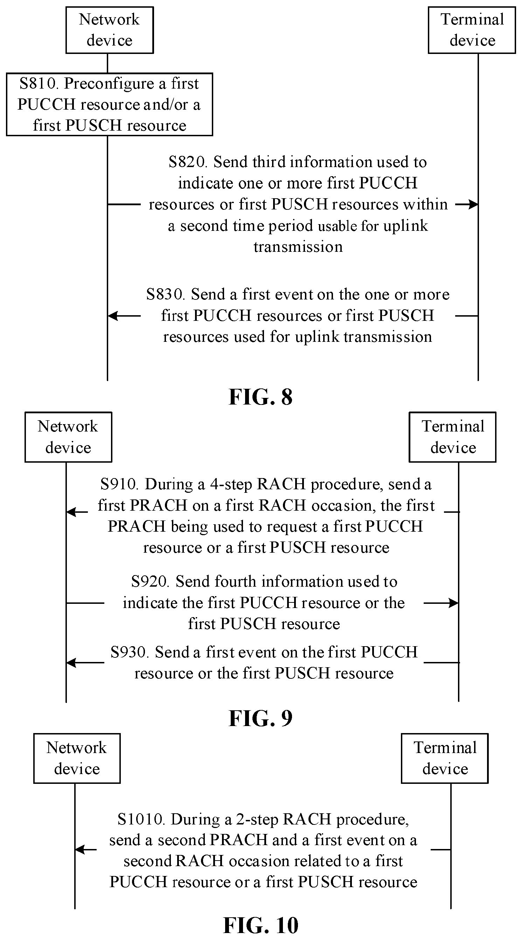

FIG. 8 is a third detailed schematic flowchart of a communication method according to an embodiment of the disclosure. As shown in FIG. 8, the detailed process may include the following operations.

In an operation S810, the network device pre-configures a first PUCCH resource or a first PUSCH resource.

In an operation S820, the network device sends third information to the terminal device, the third information being used to indicate one or more first PUCCH resources or first PUSCH resources usable for uplink transmission within a second time period.

In an operation S830, the terminal device sends a first event to the network device on the one or more first PUCCH resources or first PUSCH resources for uplink transmission,

Herein, a start time of the second time period is earlier than a start time of the first time period.

Exemplarily, the first time period may be a period of time after the current time.

It is to be noted that in a case it is determined that the first event meets the preset condition, the terminal device sends the first event to the network device on the one or more first PUCCH resources or first PUSCH resources for uplink transmission. That is to say, in the case where the terminal device determines that the first event meets the preset condition, the terminal device performs the operation S830.

For example, assuming that the second time period has 8 time slots, and the network device pre-configures one potentially usable first PUCCH resource or first PUSCH resource for each time slot, then the network device may indicate, through the third information, the first PUCCH resource or the first PUSCH resource that is usable for uplink transmission and the first PUCCH resource or the first PUSCH resource that is not usable for uplink transmission in the second time period. For example, the network device indicates a bitmap {00110100} through the third information, so that the terminal device can learn that in the second time period, first PUCCH resources or first PUSCH resources on the third, fourth and sixth time slots are usable for uplink transmission, and first PUCCH resources or first PUSCH resources on the first, second, fifth, seventh and eighth time slots are not usable for uplink transmission, so that interference to uplink transmission of other terminal devices can be avoided.

In some embodiments, the third information may be carried by DCI signaling and/or MAC CE signaling.

Exemplarily, in a case where the third information is carried by DCI signaling, the third information may be used to indicate one or more first PUCCH resources that are usable for uplink transmission within the second time period. That is to say, the network device may indicate, through DCI signaling, one or more first PUCCH resources that are usable for uplink transmission within the second time period. An indication manner of the DCI signaling may include:
(1) for multicast DCI of a plurality of terminal devices, one or more terminal devices within a group may all use the first PUCCH resource indicated by the DCI;
(2) for broadcast DCI of all terminal devices, all terminal devices may use the first PUCCH resource indicated by the DCI; and
(3) for unicasted DCI of a single terminal device, a terminal device receiving the dedicated DCI may use the indicated first PUCCH resource.

It is to be understood that among the one or more first PUCCH resources indicated by the third information, some of the first PUCCH resources have a relatively small payload size (e.g., not exceeding 2 bits) and cannot carry the report of the first event; and some of the first PUCCH resources have a relatively large payload size (for example, exceeding 2 bits), and can carry the report of the first event. After receiving the third information, the terminal device may carry the report of the first event using a first PUCCH resource having a relatively large payload size among the one or more first PUCCH resources indicated by the third information.

Exemplarily, in a case where the third information is carried by DCI signaling, the third information may be used to indicate one or more first PUSCH resources that are usable for uplink transmission within the second time period. That is to say, the network device may indicate, through DCI signaling, one or more first PUSCH resources that are usable for uplink transmission within the second time period. An indication manner of the DCI signaling may include:
(1) for multicast DCI of a plurality of terminal devices, one or more terminal devices within a group may all use the first PUSCH resource indicated by the DCI;
(2) for broadcast DCI of all terminal devices, all terminal devices may use the first PUSCH resource indicated by the DCI; and
(3) for unicasted DCI of a single terminal device, a terminal device receiving the dedicated DCI may use the indicated first PUSCH resource.

It is to be understood that the one or more first PUSCH resources indicated by the third information have a sufficient payload size to carry the report of the first event.

Exemplarily, in a case where the third information is carried by MAC CE signaling, the third information may be used to indicate one or more first PUCCH resources or first PUSCH resources that are usable for uplink transmission within the second time period. That is to say, the network device may indicate, through MAC CE signaling, one or more first PUCCH resources or first PUSCH resources that are usable for uplink transmission within the second time period. An indication manner of the MAC CE signaling may include:

for unicasted MAC CE of a single terminal device, a terminal device receiving the dedicated MAC CE may use the indicated first PUCCH resource.

It is to be understood that MAC CE is terminal device-specific signaling and does not have the characteristics of broadcast and multicast. Therefore, the indication by the MAC CE is only for a single terminal device.

With the method, for the pre-configured first PUCCH resources or first PUSCH resources, the network device can more flexibly indicate one or more first PUCCH resources or first PUSCH resources that are usable for uplink transmission, while also avoiding the overhead of the terminal device requesting the first PUCCH resources or the first PUSCH resources.

In some embodiments, the first PUCCH resource or the first PUSCH resource may have one or more of following characteristics:
a payload size of the first PUCCH resource or the first PUSCH resource is greater than a first threshold;
the first PUCCH resource or the first PUSCH resource is configured by a broadcast mode, a multicast mode or a unicast mode;
the first PUCCH resource is configured in one or more PUCCH resource sets;
the first PUSCH resource is configured in one or more PUSCH resource sets; and
the first PUCCH resource or the first PUSCH resource is periodic, semi-persistent, or aperiodic.

It is to be understood that the first threshold may be a parameter value predefined by the protocol, or may be a parameter value set by another manner, and the embodiments of the disclosure are not limited thereto.

Exemplarily, the first threshold may be equal to 2, and the payload size of the first PUCCH resource or the first PUSCH resource may be greater than 2 bits, so that the report of the first event can be carrier.

It is to be understood that one PUSCH resource may be a time-frequency resource allocated by a network device, which can be used for uplink transmission. One PUSCH resource may have one resource index. A plurality of PUSCH resources may form a PUSCH resource set.

It is to be noted that in a case where the first PUCCH resource or the first PUSCH resource is configured in a broadcast manner, all terminal devices may multiplex the first PUCCH resource or the first PUSCH resource; in a case where the first PUCCH resource or the first PUSCH resource is configured in a multicast manner, some terminal devices may multiplex the first PUCCH resource or the first PUSCH resource; and in a case where the first PUCCH resource or the first PUSCH resource is configured in a unicast manner, the first PUCCH resource or the first PUSCH resource may be used by a single terminal device.

In a case where the first PUCCH resource or the first PUSCH resource is periodic or semi-persistent, the network device may not dynamically indicate the first PUCCH resource or the first PUSCH resource. In a case where the first PUCCH resource or the first PUSCH resource is aperiodic, the network device may dynamically indicate the first PUCCH resource or the first PUSCH resource, for example, the network device may transmit third information to the terminal device, so that after receiving the third information, the terminal device can learn one or more first PUCCH resources or first PUSCH resources that can be used for uplink transmission in the second time period.

It is to be understood that the terminal device does not transmit the first event on the pre-configured first PUCCH resource or first PUSCH resource, in a case where the first event does not meet the preset condition. If the network device does not receive the first event on the pre-configured first PUCCH resource or first PUSCH resource, it is considered that the terminal device side does not need to report the first event.

It is to be further understood that, in order to avoid the terminal device having no pre-configured first PUCCH resource and/or first PUSCH resource to carry report of the first event after the terminal device determines that the first event meets the preset condition, the network device may configure a time-domain feature (such as a period) of the first PUCCH resource and/or the first PUSCH resource to be relatively short, thereby reducing the reporting delay of the first event.

With the manner #C, the network device may pre-configure the first PUCCH resource or the first PUSCH resource, so that the terminal device may not request the first PUCCH resource or the first PUSCH resource from the network device, thereby saving the reporting overhead. The terminal device may carry the report of the first event using the pre-configured first PUCCH resource or first PUSCH resource, thereby reducing the reporting overhead and the configuration overhead without delaying the switching of the serving spatial filter by the terminal device.

In a manner D, the terminal device may acquire the first PUCCH resource or the first PUSCH resource based on a Random Access Channel (RACH) procedure, and carry the report of the first event based on the first PUCCH resource or the first PUSCH resource.

It is to be noted that whether the first event meets the preset condition and the RACH process have strong randomness and are both triggered by the terminal device, so they have similar time-domain characteristics and can be used in combination with each other.

Hereinafter, manners in which the terminal device acquires the first PUCCH resource or the first PUSCH resource for different RACH procedures will be described with reference to FIG. 9 and FIG. 10, respectively.

FIG. 9 is a fourth detailed schematic flowchart of a communication method according to an embodiment of the disclosure. As shown in FIG. 9, the detailed process may include the following operations.

In an operation S910, during a 4-step RACH procedure, the terminal device sends a first PRACH to the network device on a first RACH occasion, the first PRACH being used to request the first PUCCH resource or the first PUSCH resource.

In an operation S920, the network device sends fourth information to the terminal device, the fourth information being used to indicate the first PUCCH resource or the first PUSCH resource.

In an operation S930, the terminal device sends a first event to the network device on the first PUCCH resource or the first PUSCH resource.

Herein, the first event is used by the network device to determine a first serving spatial filter for the first time period.

Exemplarily, the first RACH occasion may be a dedicated RACH occasion that refers to a RACH occasion dedicated to requesting the first PUCCH resource or first PUSCH resource carrying the first event.

Exemplarily, after receiving the first PRACH, the network device may allocate the first PUSCH resource or the first PUCCH resource to the terminal device in a Random Access Response (RAR).

It is to be noted that the terminal device sends the first PRACH to the network device, after the terminal device determines that the first event meets the preset condition, or before the terminal device determines that the first event meets the preset condition, and the embodiments of the disclosure are not limited thereto.

It is to be further noted that in a case where the terminal device determines that the first event meets the preset condition, the terminal device sends the first event to the network device on the first PUCCH resource or the first PUSCH resource. That is to say, in the case where the terminal device determines that the first event meets the preset condition, the terminal device performs the operation S930.

FIG. 10 is a fifth detailed schematic flowchart of a communication method according to an embodiment of the disclosure. As shown in FIG. 10, the detailed process may include the following operations.

In an operation S1010, during a 2-step RACH procedure, a terminal device sends a second PRACH and the first event on a second RACH occasion, the second RACH occasion being related to the first PUCCH resource or the first PUSCH resource.

Herein, the first event is used by the network device to determine a first serving spatial filter for the first time period.

Exemplarily, the second RACH occasion may be a dedicated RACH occasion that refers to a RACH occasion dedicated to requesting the first PUCCH resource or first PUSCH resource carrying the first event.

It is to be noted that the terminal device may send the second PRACH to the network device, after the terminal device determines that the first event meets the preset condition.

For example, after the terminal device determines that the first event meets the preset condition, the terminal device may send the second PRACH and the first event on the second RACH occasion corresponding to the Message (Msg.) A.

It is to be noted that the fact that the second RACH occasion is related to the first PUCCH resource or the first PUSCH resource can be understood as: the terminal device can determine the time-frequency resource corresponding to the second RACH occasion as the first PUCCH resource or the first PUSCH resource for uplink transmission, so that the terminal device can send the second PRACH and the first event to the network device on the first PUCCH resource or the first PUSCH resource for uplink transmission.

With the manner #D, the terminal device can acquire the first PUCCH resource or the first PUSCH resource based on the RACH procedure, and carry the report of the first event based on the first PUCCH resource or the first PUSCH resource, thereby reducing the reporting overhead and the configuration overhead without delaying the switching of the serving spatial filter by the terminal device.

In a manner #E, the network device may predict that the first event meets the preset condition, and thus can indicate the first PUCCH resource or the first PUSCH resource to the terminal device, so that the terminal device carries the report of the first event based on the first PUCCH resource or the first PUSCH resource.

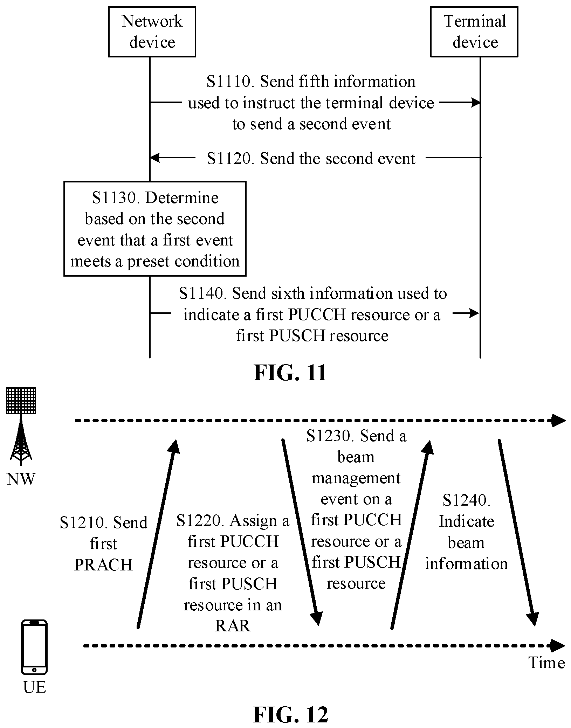

FIG. 11 is a sixth detailed schematic flowchart of a communication method according to an embodiment of the disclosure. As shown in FIG. 11, the detailed process may include the following operations.

In an operation S1110, the network device sends fifth information to the terminal device, the fifth information being used to instruct the terminal device to send a second event.

In an operation S1120, the terminal device sends the second event to the network device.

In an operation S1130, the network device determines, based on the second event, that the first event meets the preset condition.

In an operation S1140, the network device sends sixth information to the terminal device, the sixth information being used to indicate the first PUCCH resource or the first PUSCH resource.

Herein, the first event is used by the network device to determine a first serving spatial filter for the first time period.

Herein, the second event is used by the network device to determine whether the first event meets the preset condition.

It is to be noted that the second event may include one or more of:
an index of a reference signal resource corresponding to a third serving spatial filter;
a link quality of the reference signal resource corresponding to the second serving spatial filter;
an index of a reference signal resource corresponding to a candidate spatial filter;
a link quality of the reference signal resource corresponding to the candidate spatial filter;
a fluctuation range of the link quality of the reference signal resource corresponding to the third serving spatial filter; and
an interference intensity of the candidate spatial filter to the third serving spatial filter.

Herein, the third serving spatial filter is a serving spatial filter for a sixth time period, and an end time of the sixth time period is earlier than a start time of the third time period.

It is to be understood that since the end time of the third time period is earlier than the start time of the first time period, the end time of the sixth time period is also earlier than the start time of the first time period.

That is to say, the second event is an event before the current time, and the second event may also be referred to as a historical event.

It is to be understood that the contents of the second event are similar to those of the first event, and reference may be made to the related description in the first event, which will not be repeated here.

In some embodiments, the operation of determining, by the network device based on the second event, that first event meets the preset condition may include: the network device determines, based on the second event, a confidence level that the first event meets the preset condition; and determines that the first event meets the preset condition, in a case where the confidence level is greater than a seventh threshold.

It is to be understood that the seventh threshold may be a parameter value predefined by the protocol, or may be a parameter value set by another manner, and the embodiments of the disclosure are not limited thereto.

It is to be noted that in a case where the confidence level is greater than the seventh threshold, the terminal device can predict that the first event meets the preset condition, so that it can further predict that the terminal device needs to report the first event, and the terminal device does not have enough first PUCCH resources or first PUSCH resources to carry the report of the first event. In this case, the network device may indicate the first PUCCH resource or the first PUSCH resource to the terminal device in advance, so that the terminal device may carry the report of the first event based on the first PUCCH resource or the first PUSCH resource.

Implementations that the network device determines, based on the second event, that the first event meets the preset condition may include the following two.

In one possible implementation, based on the second event, the network device may directly determine that the first event meets the preset condition.

Exemplarily, in a case where the link quality of the reference signal resource corresponding to the third serving spatial filter is poor in the sixth time period, the terminal device may consider that the link quality of the reference signal resource corresponding to the second serving spatial filter is also poor in the third time period, and may predict that the first event meets the preset condition.

Exemplarily, in a case where the link quality of the reference signal resource corresponding to the candidate spatial filter is good in the sixth time period, the terminal device may consider that the link quality of the reference signal resource corresponding to the candidate spatial filter is also good in the third time period, and may predict that the first event meets the preset condition.

With this method, the network device may directly determine, based on the second event, that the first event meets the preset condition, and thus may indicate the first PUCCH resource or the first PUSCH resource to the terminal device. The terminal device can carry the report of the first event by using the first PUCCH resource or the first PUSCH resource indicated by the network device, and does not need to request the first PUCCH resource or the first PUSCH resource from the network device by itself, which not only reduces the reporting overhead and the configuration overhead, but also does not delay the switching of the serving spatial filter by the terminal device.

In another possible implementation, the network device may input the second event into the first model, and determine that the first event meets a preset condition.

Exemplarily, the first model may be an AI/ML model.

Exemplarily, the first model may be trained in advance by the network device.

It is to be noted that the network device may input the second event into the first model, determine through the first model that the confidence level that the first event meets the preset condition is greater than the seventh threshold, and predict that the first event meets the preset condition.

With this method, the network device may input the second event into the first model, determine that the first event meets a preset condition, and thus may indicate the first PUCCH resource or the first PUSCH resource to the terminal device. The terminal device can carry the report of the first event by using the first PUCCH resource or the first PUSCH resource indicated by the network device, and does not need to request the first PUCCH resource or the first PUSCH resource from the network device by itself, which not only reduces the reporting overhead and the configuration overhead, but also does not delay the switching of the serving spatial filter by the terminal device.

It is to be noted that in a case where the network device predicts that the first event does not meet the preset condition, it may be considered that the terminal device does not need to report the first event, and the first PUCCH resource or the first PUSCH resource may not be instructed to the terminal device, thereby saving configuration overhead.

It is to be further noted that, after receiving the first PUCCH resource or the first PUSCH resource indicated by the network device, if the terminal device determines that the first event meets the preset condition, the terminal device may use the indicated first PUCCH resource or the first PUSCH resource to carry the report of the first event; if the terminal device determines that the first event does not meet the preset condition, it indicates that the prediction of the network device is wrong, and at this time, the terminal device may ignore the indicated first PUCCH resource or the first PUSCH resource, and does not perform any uplink reporting. For the behavior that the terminal device does not perform any reporting, the network device may deem that the terminal device does not need to report the first event, and that the prediction of the first model on the network device side is inaccurate.

With the manner #E, the network device can predict that the first event meets the preset condition, and can indicate the first PUCCH resource or the first PUSCH resource to the terminal device, so that the terminal device carries reporting of the first event based on the first PUCCH resource or the first PUSCH resource, and does not need to request the first PUCCH resource or the first PUSCH resource from the network device itself, thereby reducing reporting overhead and configuration overhead without delaying switching of the serving spatial filter by the terminal device.

When the number of the first PUCCH resources or first PUSCH resources is multiple, the manners #A to #E may be used in combination and are not mutually exclusive. For example, the terminal device may obtain a part of the first PUCCH resources or first PUSCH resources based on the manner #A, and then obtain another part of the first PUCCH resources or first PUSCH resources based on the manner #C. For another example, the terminal device may obtain a part of the first PUCCH resources or first PUSCH resources based on the manner #B, and then obtain another part of the first PUCCH resources or first PUSCH resources based on the manner #E. For another example, the terminal device may obtain a part of the first PUCCH resources or first PUSCH resources based on the manner #C, and then obtain another part of the first PUCCH resources or first PUSCH resources based on the manners #D and #E.

In some embodiments, in a case where a number of the first PUCCH resources or the first PUSCH resources is multiple, the operation of sending, by the terminal device, the first event to the network device on the first PUCCH resource or the first PUSCH resource may include:
selecting one of the first PUCCH resources or the first PUSCH resources based on indexes of a plurality of the first PUCCH resources or the first PUSCH resources; and
sending the first event to the network device on the one of the first PUCCH resources or the first PUSCH resources,
where the one of the first PUCCH resources or the first PUSCH resources is randomly selected; or,
the one of the first PUCCH resources or the first PUSCH resources has a lowest or highest index.

Accordingly, in a case where a number of the first PUCCH resources or the first PUSCH resources is multiple, the operation of receiving, by the network device on the first PUCCH resource or the first PUSCH resource, the first event sent by the terminal device may include:
receiving, on the one of the first PUCCH resources or the first PUSCH resources, the first event sent by the terminal device,
where the one of the first PUCCH resources or the first PUSCH resources is randomly selected; or,
the one of the first PUCCH resources or the first PUSCH resources has a lowest or highest index.

It is to be noted that in a case where the terminal device determines that the first event meets the preset condition, the terminal device may report the first event using one of the first PUCCH resources or one of the first PUSCH resources. In the process of selecting one first PUCCH resource or first PUSCH resource, the terminal device may randomly select one first PUCCH resource based on the indexes of a plurality of first PUCCH resources, or randomly select one first PUSCH resource based on the indexes of a plurality of first PUSCH resources. Alternatively, the terminal device may select one first PUCCH resource or first PUSCH resource according to a predefined rule, for example, selecting one first PUCCH resource or first PUSCH resource having the lowest or highest index.

With this method, in a case where there are a plurality of first PUCCH resources or first PUSCH resources, one first PUCCH resource or first PUSCH resource can be selected from the plurality of first PUCCH resources or first PUSCH resources, thereby avoiding resource conflicts among multiple terminal devices.

In some embodiments, the terminal device may send first capability information to the network device, the first capability information being used to represent that the terminal device supports acquiring the first event and/or supports sending the first event.

Accordingly, the network device may receive the first capability information sent by the terminal device.

With this method, after receiving the first capability information, the network device can learn that the terminal device supports acquiring the first event and/or supports sending the first event. Based on the first capability information, the network device can subsequently indicate or pre-configure, to the terminal device, a reference signal resource required to acquire the first event, and/or a first PUCCH resource or a first PUSCH resource required to send the first event.

In some embodiments, the first capability information may include one or more of:
the terminal device supports requesting the first PUSCH resource based on a first SR;
the terminal device supports requesting the first PUCCH resource based on a second SR; and
the terminal device supports requesting the first PUCCH resource or the first PUSCH resource based on a first PRACH.

In some embodiments, the network device may send seventh information to the terminal device, where the seventh information may be used to indicate one or more of the following:
a reference signal resource corresponding to a second serving spatial filter;
a reference signal resource corresponding to a candidate spatial filter;
the first PUCCH resource,
the first PUSCH resource,
where the second serving spatial filter is a serving spatial filter for a third time period, and an end time of the third time period is earlier than a start time of the first time period.

Accordingly, the terminal device may receive the seventh information sent by the network device.

Further, in some embodiments, the seventh information may be related to first capability information.

It is to be noted that in a case where the terminal device obtains the reference signal resources corresponding to the second serving spatial filter and/or the reference signal resources corresponding to the candidate space filter, the terminal device may measure the reference signal(s) on the reference signal resources, thereby acquiring the first event, and further determining whether the first event meets a preset condition.

It is to be further noted that in a case where the terminal device acquires the first PUCCH resource and/or the first PUSCH resource, if the terminal device determines that the first event meets the preset condition, the terminal device may send the first event on the first PUCCH resource and/or the first PUSCH resource, thereby reducing the reporting overhead and the configuration overhead without delaying the switching of the serving spatial filter by the terminal device.

It is to be understood that for the manner for acquiring the first PUCCH resource or the first PUSCH resource by the terminal device, reference may be made to the aforementioned manner #A to #E, which will not be described again here.

In the embodiment of the disclosure, the network device may indicate or pre-configure hybrid first PUSCH resource(s) and first PUCCH resource(s), and the terminal device may carry the report of the first event using the hybrid first PUSCH resource(s) and first PUCCH resource(s). An exemplary description of the network device indicating or pre-configuring the hybrid first PUSCH resource(s) and the first PUCCH resource(s) is similar to the network device indicating or pre-configuring the first PUSCH resource or the first PUCCH resource, and will not be described again here.

The embodiment of the disclosure provides a communication method. In a case where a first event meets a preset condition, the terminal device can send the first event to a network device on a first PUCCH resource or a first PUSCH resource. The first event is used by the network device to determine a first serving spatial filter for a first time period. Thus, after determining that the first event meets the preset condition, the terminal device may carry the report of the first event through the first PUCCH resource or the first PUSCH resource. In this way, the terminal device can actively report the first event, thereby reducing both the reporting overhead and the configuration overhead without delaying the switching of the serving spatial filter.

The communication method provided by the embodiment of the disclosure will be described in detail below with reference to specific application scenarios.

For ease of description, "beam (pair)" is used in the following embodiments to denote "spatial filter". Alternatively, in some scenarios, "beam (pair)" and "spatial filter" hereinafter are interchangeable.

The UE determines whether the beam management event (that is, the first event) meets a preset condition with certain randomness, and the NW cannot accurately allocate or schedule the first PUCCH resource or the first PUSCH resource in advance to be used to carry the report of the beam management event. Therefore, a variety of manners to request the NW to allocate the first PUCCH resource or the first PUSCH resource are considered and designed in the embodiments of the disclosure, for example, pre-allocating the common or dedicated first PUCCH resource or first PUSCH resource, and for another example, predicting the allocation occasion of the first PUCCH resource or the first PUSCH resource through an AI/ML model (i.e., the first model).

Given that the UE has a more accurate and timely observation of beam quality changes, a beam reporting process initiated by the UE (i.e., reporting the first event) can lead to more timely beam reporting while reducing the overhead of reporting. For example, if the UE determines that the current beam quality has deteriorated, the UE may actively trigger beam reporting without requiring the NW to allocate or frequently trigger the reporting.

The embodiment of the disclosure considers reporting a beam management event by the UE to obtain the first PUCCH resource or the first PUSCH resource. To this end, several cases in which the beam management event meets the preset condition may first be defined by way of example.

In some embodiments, the beam management event may include one or more of:
a link quality of a reference signal resource corresponding to a serving beam of a serving cell (i.e., the second serving spatial filter) is better than a specific threshold (i.e., the second threshold);
the link quality of the reference signal resource corresponding to the serving beam of the serving cell is weaker than the specific threshold (i.e., a second threshold);
a link quality of a reference signal resource corresponding to a candidate beam of the serving cell is better than that of a current serving beam plus an offset amount;
a link quality of a reference signal resource corresponding to a candidate beam of a non-serving cell is better than that of the current serving beam plus the offset amount;
the link quality of the reference signal resource corresponding to the candidate beam of the serving cell is better than a specific threshold (i.e., the third threshold);
the link quality of the reference signal resource corresponding to the candidate beam of the non-serving cell is better than the specific threshold (i.e., the third threshold);
the link quality of the reference signal resource corresponding to the serving beam of the serving cell is weaker than a specific threshold (i.e., the second threshold), and the link quality of the candidate beam of the serving cell is better than a specific threshold (i.e., the third threshold);
the link quality of the reference signal resource corresponding to the serving beam of the serving cell is weaker than a specific threshold (i.e., the second threshold), and the link quality of the reference signal resource corresponding to the candidate beam of the non-serving cell is better than a specific threshold (i.e., the third threshold);
a fluctuation range of the link quality of the reference signal resource corresponding to the serving beam of the serving cell exceeds a certain range (i.e., the preset range);
an interference intensity of the candidate beam of the serving cell to the serving beam of the serving cell is stronger than a certain threshold (i.e., the fourth threshold); and
an interference intensity of the candidate beam of the non-serving cell to the serving beam of the serving cell is stronger than the certain threshold (i.e. the fourth threshold).

The link quality of the serving beam or candidate beam can be measured using metrics of the physical layer, such as L1-RSRP, L1-RSRQ, L1-RSSI, L1-SINR, and BLER of the PDCCH. These metrics can also serve as link quality for inputs and outputs to AI/ML models. For the BLER of the PDCCH, the UE may convert the measured L1-SINR into the BLER of the PDCCH according to the conditions defined in the standard. In general, when the BLER of the PDCCH is higher than 1%, it is considered that the link quality is poor and needs to be adjusted.

For the fluctuation of the beam link quality in beam management events, reference may be made to FIG. 4. In some embodiments, the fluctuation is characterized by a number of times that the link quality crosses some predefined threshold (i.e., the fifth threshold) from above to below within a length of time (e.g., a time window) (i.e., the fourth time period).

In other embodiments, a measure of the fluctuation in link performance may be a duration for which the link quality is below a specific threshold (i.e., the sixth threshold) within a specific length of time (e.g., a time window) (i.e., the fifth time period), as shown in FIG. 5. Or, the measure may be a ratio of the duration for which the link quality is below the specific threshold to a total length of time.

FIG. 3 illustrates serving beams and candidate beams within a serving cell, and candidate beams within a non-serving cell. It is to be noted that the NR supports an inter-cell beam management mechanism in R17, that is, a beam of a non-serving cell may be converted to a serving beam.

For example, in a case where the non-serving cell or the candidate beam of the serving cell is better than the current serving beam plus an offset amount (e.g., 3 dB), the UE may find through measurement that the beam management event meets a preset condition, and thus may trigger reporting of the beam management event.

After finding, through the measurement, that the beam management event meets the preset condition, the UE may report, to the NW, one or more of the following beam management events:
an index of a reference signal resource corresponding to a serving beam;
a link quality of the reference signal resource corresponding to the serving beam;
an index of a reference signal resource corresponding to a candidate beam;
a link quality of the reference signal resource corresponding to the candidate beam;
a fluctuation range of the link quality of the reference signal resource corresponding to the serving beam; and
an interference intensity of the candidate beam to the serving beam.

It is to be noted that each of the candidate beam and the serving beam may correspond to a reference signal resource; and the index of the non-serving cell may be represented using the PCI.

The UE may inform the NW through reporting of the capability (i.e., the first capability information) whether it supports measuring and/or reporting of beam management event. If it supports, the UE may inform the NW of the type of beam management event that it supports measuring and/or reporting.

Depending on the capability reported by the UE, the NW may allocate a reference signal resource and/or a reporting resource (i.e., the first PUCCH resource or first PUSCH resource) required for measurement of the beam management event.

The UE measures the reference signal on the reference signal resource allocated by the NW to determine whether the beam management event meets the preset condition.

When the UE determines that the beam management event meets the preset condition and needs to report the beam management event to the NW, the UE needs to obtain a reporting resource (that is, the first PUCCH resource or first PUSCH resource) to carry the report of the beam management event. It may be assumed that the UE does not have pre-allocated reporting resource(s) within a certain time window, such as PUSCH scheduled uplink DCI, Type 1 CG-PUSCH configured by RRC, or Type 2 CG-PUSCH activated by DCI.

When the UE reports the beam management event, the UE may report the index of the reference signal resource corresponding to the candidate beam (from the serving cell or the candidate cell). The index of the reference signal resource may be associated with a unified TCI state, i.e. the unified TCI state contains the reference signal (as achieved by the RRC configuration of the NW). After the UE completes the report of the beam management event, the UE expects beam indication information from the NW. For example, the NW may indicate a unified TCI State to the UE through DCI signaling or MAC CE signaling.

For the transmission of uplink channels and signals, the unified TCI state may be associated with an uplink TAG, corresponding to a TA value. Additionally, the unified TCI state may be associated with a set of uplink power control parameters, including P0, Alpha, CLI, PL RS, and/or the like.

For the transmission of downlink channels and signals, the reported reference signal index (e.g., CRI) may be associated with a set of CSI information, including PMI, RI, CQI, and/or the like. This association can be understood as CSI per beam.

The UE may acquire the first PUCCH resource or the first PUSCH resource to carry the report of the beam management event, and the following seven embodiments will explain manners through which the UE acquires the first PUCCH resource or the first PUSCH resource.

In a first embodiment, the first SR requests the first PUSCH resource to carry the report of the beam management event.

The uplink scheduling request in the related art requests a PUSCH resource, but the content carried is either high-layer data or MAC CE of the MAC layer.

In the embodiment of the disclosure, it is designed that the first SR is used to request the first PUSCH resource to carry the report of the beam management event.

Note 1: since periodic/semi-persistent/aperiodic beam reporting also falls within the scope of CSI reporting in the standard, beam management event-based reporting can be understood as CSI reporting.

Note 2: the second PUCCH format carrying the first SR tends to have a relatively small payload size (not exceeding 2 bits), and cannot carry the report of a complete beam management event.

The UE needs to report the first capability information, indicating whether it supports using the first SR to request the first PUSCH so as to carry the report of the beam management event.

In some embodiments, the UE sends the first SR to the NW on a second PUCCH resource associated with a special SR occasion (i.e., the first SR occasion). The particularity is that the first SR occasion is dedicated to requesting a first PUSCH resource carrying a beam management event. The first SR is configured by NW through the RRC and is different from the SR used to request the PUSCH to carry the higher-layer data or the MAC CE. The NW may configure the special SR (i.e., the first SR) capable of requesting the first PUSCH resource.

In some embodiments, a conventional SR (i.e., the first SR) is used, but the scheduling request information contained in the first SR is not only one bit of information (i.e., "0" indicates that no scheduling request is made, and "1" indicates that a scheduling request is made). The first SR may contain a type of information carried by the requested first PUSCH, for example, scheduling request information of 2 bits may be designed, and its code points may represent the following information.
"00" represents that no SR is initiated;
"01" represents requesting the the first PUSCH to carry higher-layer data or uplink MAC CE in the related art;
"10" represents requesting the first PUSCH to carry the report of the beam management event; and
"11" is used as a reserved bit.

With this method, the UE can inform the NW in the uplink resource request (i.e., the first SR sent) that the beam management event to be carried by the first PUSCH resource requested by the UE is important. The reporting of beam management events often involves the change of link quality, and even a beam failure event may occur. The NW may allocate the first PUSCH resource to the UE according to the importance of the first SR.

Exemplarily, the NW may allocate the uplink first PUSCH resource to the UE through the uplink DCI.

It is to be noted that for the uplink resource request based on the first SR, the UE needs to wait for the periodic uplink first SR occasion. If the period is configured to be too long, the beam management event cannot be reported in time; if the period is configured to be too short, it is necessary to reserve a certain amount of second PUCCH resources for reporting the beam management event multiple times.

In a second embodiment, the second SR requests the first PUCCH resource to carry the report of the beam management event.

The SR in the related art may be used for requesting PUSCH resources, but not for requesting PUCCH resources.

Another special SR (i.e. the second SR) is designed in the embodiment of the disclosure, which that can request the first PUCCH resource. The second SR itself is carried by a third PUCCH resource with a relatively small payload size (not exceeding 2 bits). The first PUCCH resource requested by the second SR has a relatively large payload size (exceeding 2 bits), which is enough to carry the report of the beam management event.

When the second SR occasion arrives, the UE may use the third PUCCH resource associated with the second SR occasion to request the first PUCCH resource. The payload size of the third PUCCH resource is insufficient to carry the report of the beam management event, but the UE may send the second SR to the network device through the third PUCCH resource to request the first PUCCH resource to carry the report of the first event.

The NW may configure, through RRC signaling, the second SR to request the first PUCCH resource, and distinguish it from the SR requesting the PUSCH resource.

In some embodiments, the NW responds to the second SR of the UE. For example, the NW schedules, through the DCI, and/or actives, through the MAC CE, one or more first PUCCH resources dedicated to the UE. The first PUCCH resource may be used to carry report of the beam management event.

In some embodiments, the NW indicates, through the DCI, or activates, through the MAC CE, one common first PUCCH resource to the UE. Subsequently, the UE may use the common first PUCCH resource to carry report of the beam management event.

With this method, the uplink resource requested by the second SR is a common or dedicated first PUCCH resource. Compared with PUSCH, reporting of the beam management events based on the first PUCCH resource only occupies a small amount of uplink time-frequency resources. During the resource indication or activation process, a small amount of information may also be used to indicate the allocated first PUCCH resource.

In a third embodiment, common first PUCCH resource(s) or first PUSCH resource(s) is/are pre-configured.

In some embodiments, the UE carries the report of the beam management event based on the common first PUCCH resource(s) or first PUSCH resource(s) (or set of resources) configured in advance. The configuration of the common first PUCCH resource or first PUSCH resource is characterized by a common attribute. That is to say, it is not exclusive to a certain terminal device, but a plurality of UEs may send information on the same first PUCCH resource or first PUSCH resource by multiplexing.

The common first PUCCH resource or the first PUSCH resource may have one or more of following characteristics:
it has a relatively large payload size (not exceeding 2 bits), which is enough to carry the report of the beam management event;
it is configured by the NW through broadcast or multicast information, and is applicable to all UEs or parr of UEs;
it is configured in one or more PUCCH resource sets;
it is configured in one or more PUSCH resource sets;
it is periodic or semi-persistent in the time domain (it can be used without dynamic indication by the NW or being requested through an SR).

With this method, the overhead of the first PUCCH resource or the first PUSCH resource is saved, and the NW may allocate one or more PUCCH resources or first PUSCH resource (or resource set) to a group of UEs.

After a certain UE determines that the beam management event meets the preset condition, it may use one of the common first PUCCH resources or one of the common first PUSCH resources to carry the reporting of the beam management event.

In some embodiments, in a case where more than one common first PUCCH resource or first PUSCH resource is configured, in order to avoid resource collisions between a plurality of UEs, the UE may randomly select one PUCCH resource according to indexes of the plurality of common first PUCCH resources or randomly select one PUSCH resource according to indexes of the plurality of common first PUSCH resources.

In other embodiments, in a case where more than one common first PUCCH resource or first PUSCH resource is configured, in order to avoid resource conflicts between a plurality of UEs, the UE may select the first PUCCH resource or the first PUSCH resource according to a predefined rule, for example, selecting one first PUCCH resource having the lowest or highest index among the plurality of first PUCCH resources, or selecting one first PSCCH resource having the lowest or highest index among the plurality of first PUSCH resources.

In order to prevent the case where the UE does not have the uplink common first PUCCH resource or the first PUSCH resource to report after determining that the beam management event meets the preset condition, the time-domain feature (such as the period) of the common first PUCCH resource or the first PUSCH resource may be configured to be relatively short, thereby reducing the delay of reporting.

In a fourth embodiment, a first PUCCH resource or first PUSCH resource dedicated to the UE is pre-configured.

In some embodiments, the NW may configure, in advance, a periodic or semi-persistent first PUCCH resource or first PUSCH resource (or set of resources) dedicated to the UE to carry the report of the beam management event.

The first PUCCH resource or first PUSCH resource dedicated to the UE may have one or more of following characteristics:
it has a relatively large payload size (not exceeding 2 bits), which is enough to carry the report of the beam management event;
it is configured by the NW through unicast information (RRC), and is applicable to a single UE;
it is configured in one or more PUCCH resource sets;
it is configured in one or more PUSCH resource sets;
it is periodic or semi-persistent in the time domain (it can be used without dynamic indication by the NW or being requested through an SR).

For a plurality of UEs in the NW, if the first PUCCH resource or first PUSCH resource dedicated to the plurality of UEs does not support multiplexing the time-frequency resource by the plurality of UEs, resource interference between the plurality of UEs may be avoided by configuring different periods and/or offset amounts.

With this method, the UE does not need to send an SR to request the first PUCCH resource or the first PUSCH resource, nor does it need to share the first PUCCH resource or the first PUSCH resource among multiple users. Each UE has a dedicated first PUCCH resource or first PUSCH resource for carrying report of the beam management event.

When the UE determines that the beam management event meets the preset condition, the UE may wait (until a next nearest transmission occasion for the first PUCCH resource or the first PUSCH resource arrives). The UE may carry the report of the beam management event on the first PUCCH resource or the first PUSCH resource.

When the UE determines that the beam management event does not meet the preset condition, the UE will not report the beam management event on the first PUCCH resource or the first PUSCH resource allocated in advance. If the NW does not receive a report from the UE on the pre-allocated dedicated first PUCCH resource or first PUSCH resource, it is considered that the UE side does not have a beam management event that needs to be reported.

In a fifth embodiment, a pre-configured first PUCCH resource or first PUSCH resource is dynamically indicated.

In some embodiments, the NW configures a plurality of periodic, semi-persistent or aperiodic first PUCCH resources through RRC signaling. The NW may indicate, by DCI signaling, a first PUCCH resource usable for uplink transmission within a period of time. An indication manner of the DCI signaling may include one or more of:
for multicast DCI of a plurality of UEs, one or more UEs within a group may all use the first PUCCH resource indicated by the DCI;
for broadcast DCI of all UEs, all UEs may use the first PUCCH resource indicated by the DCI; and
for unicasted DCI of a single UE, only a UE receiving the dedicated DCI may use the indicated first PUCCH resource.

It is to be noted that some of the indicated first PUCCH resources have a relatively small payload size, and some have a relatively large payload size enough to carry the report of the beam management event. After receiving the indication of the available first PUCCH resource, the UE may determine whether the beam management event meets the preset condition. If the beam management event meets the preset condition, the UE carries the report of the beam management event using the indicated first PUCCH resource; and if the beam management event does not meet the preset condition, the UE does not use the first PUCCH resource.

In some embodiments, the NW configures one or more Type 1 or Type 2 CG-PUSCH resources through RRC signaling. The NW may indicate, by the DCI, first PUSCH resource(s) usable for uplink transmission within a period of time. Similarly, an indication manner of the DCI may include one or more of:
for multicast DCI of a plurality of UEs, one or more UEs within a group may all use the first PUSCH resource indicated by the DCI;
for broadcast DCI of all UEs, all UEs may use the first PUSCH resource indicated by the DCI; and
for unicasted DCI of a single UE, only a UE receiving the dedicated DCI may use the indicated first PUSCH resource.

It is to be noted that, in general, the allocated first PUSCH resource has a sufficient payload size to carry the report of the beam management event.

For example, within a period of time (e.g., within the future 8 slots), the NW configures a potential first PUCCH resource or first PUSCH resource for each slot, and then indicates the available resources within the period of time via DCI. For example, a bitmap {00110100} means that among upcoming first PUCCH resources or first PUSCH resources, the third, fourth and sixth one of the first PUCCH resources or first PUSCH resources can be used by the UE for uplink transmission. The remaining first PUCCH resources or first PUSCH resources cannot be used for uplink transmission, thereby avoiding interference with uplink transmission of other UEs.

In some embodiments, the NW may also use MAC CE signaling to indicate first PUCCH resource(s) or first PUSCH resource(s) that may be used by the UE for uplink transmission over a period of time. It is to be noted that since the MAC CE signaling is UE-specific signaling and does not have the characteristics of broadcast and multicast, the indicate by the MAC CE signaling is directed to a single UE.

With this method, the NW can more flexibly allocate the upcoming first PUCCH resources and/or first PUSCH resources, and also avoids the overhead of the UE requesting the first PUCCH resource and/or the first PUSCH resource.

Further, the NW may also configure hybrid first PUSCH resource(s) and first PUCCH resource(s).

In a sixth embodiment, a first PUCCH resource or a first PUSCH resource is requested based on the RACH.

In some embodiments, the UE may request the first PUCCH resource or first PUSCH resource through a RACH procedure. The first PUCCH resource or first PUSCH resource may be used to carry the report of the beam management event.

FIG. 12 is a schematic flowchart of requesting resource allocation based on a 4-step RACH procedure according to an embodiment of the disclosure. As shown in FIG. 12, the process may include the following operations.

In an operation S1210, the UE sends a first PRACH to the NW on a first RACH occasion.

Herein, the first PRACH is used to request the first PUCCH resource or first PUSCH resource.

It is to be noted that the first RACH occasion is a dedicated RACH occasion, and the dedicated RACH occasion is a RACH occasion dedicated to requesting resource(s) for reporting the beam management event.

Exemplarily, after determining that the beam management event meets the preset condition, the UE may send the first PRACH to the NW on the first RACH occasion,.

In an operation S1220, the NW allocates the first PUCCH resource or the first PUSCH resource to the UE in the RAR.

In an operation S1230, the UE sends a beam management event to the NW on the first PUCCH resource or the first PUSCH resource.

In an operation S1240, the NW indicates beam information to the UE.

Exemplarily, the NW indicates the beam information through a RACH Completion message. For example, the NW indicates a new beam (i.e., the first serving spatial filter) (including one or a set of unified TCI State (s)) in the corresponding PDCCH. For another example, a new beam (including one or a set of unified TCI State (s)) is activated by MAC CE in a corresponding PDSCH. Herein, the PDCCH and the PDSCH correspond to the RACH Completion message.

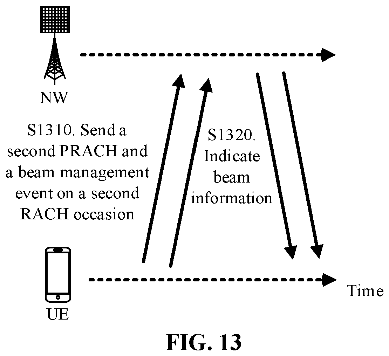

FIG. 13 is a schematic flowchart of requesting resource allocation based on a 2-step RACH procedure according to an embodiment of the disclosure. As shown in FIG. 13, the process may include the following operations.

In an operation S1310, the UE sends a second PRACH and a beam management event to the NW on the second RACH occasion.

For example, after determining that the beam management event meets the preset condition, the UE sends the second PRACH and the beam management event to the NW on the second RACH occasion corresponding to a Msg. A.

In an operation S1320, the NW indicates beam information to the UE.

Exemplarily, after receiving the report of the beam management event, the NW indicates, in a Msg. B, a new beam (i.e., the first serving spatial filter) corresponding to the beam management event. For example, the NW indicates a new beam (including one or a set of unified TCI State (s)) in the corresponding PDCCH. For another example, a new beam (including one or a set of unified TCI State (s)) is activated by MAC CE in a corresponding PDSCH. Herein, the PDCCH and the PDSCH correspond to the Msg. B.

With this method, both the beam management event and the random access have strong randomness and are triggered by UE or driven by an event, so they have similar time-domain characteristics and can be used in combination.

In a seventh embodiment, a first PUCCH resource or a first PUSCH resource is predicted and allocated based on an AI/ML model.

In some embodiments, an AI/ML model may be deployed on the network device side, and the AI/ML model may predict the confidence level that the beam management event meets the preset condition, so that the NW may indicate the first PUCCH resource or the first PUSCH resource to the UE in a case where the confidence level that the predicted beam management event meets the preset condition is higher than a certain threshold (i.e., the seventh threshold).

It is to be noted that the NW can predict the confidence level that the beam management event meets the preset condition by training the AI/ML model. The UE may report historical beam management event(s) to the NW. This beam management event can be used as an input to the AI/ML model. Through the prediction of AI/ML model, it can be obtained whether the UE-side beam management event meets the preset condition. For example, in a case where the confidence level that the beam management event outputs by the AI/ML model meets the preset condition is higher than a certain specific threshold, the AI/ML model may determine that the UE needs uplink resource(s) for reporting the beam management event, and the UE currently does not have enough resources to report it.

After the NW predicts that the beam management event meets the preset condition and the UE needs to report the beam management event, the NW may indicate in advance, to the UE, an uplink first PUCCH resource or a first PUSCH resource for carrying the report of the beam management event.

After determining that the beam management event meets the preset condition, the UE may carry the report of the beam management event using the pre-allocated or pre-indicated first PUCCH resource or first PUSCH resource. After determining that the beam management event does not meet the preset condition, the UE may choose to ignore the first PUCCH resource or the first PUSCH resource and do not perform any uplink reporting. At this time, the prediction by the AI/ML model on the NW side can be considered to be wrong. For the behavior in which the UE does not perform any reporting, the NW may consider that the UE side does not need to report the beam management event, and the prediction by the AI/ML model on the NW side is inaccurate.

It is to be noted that the uplink resource prediction mechanism based on AI/ML model can be used in combination with other uplink resource request mechanisms, and they are not mutually exclusive.

With this method, the UE does not need to send an SR to request the first PUCCH resource or the first PUSCH resource, and the NW directly indicates the first PUCCH resource or the first PUSCH resource to the UE to carry the reporting of the beam management event, which can reduce the reporting delay of the beam management event.

The preferred embodiments of the disclosure have been described in detail above with reference to the accompanying drawings, but the disclosure is not limited to the specific details in the above-described embodiments. Within the scope of the technical concept of the disclosure, various simple modifications can be made to the technical solutions of the disclosure, and these simple modifications all fall within the scope of protection of the disclosure. For example, various specific technical features described in the above-described detailed description can be combined in any suitable manner without contradiction, and various possible combinations will not be described separately in the disclosure in order to avoid unnecessary repetition. For example, various embodiments of the disclosure may be combined arbitrarily, and as long as they do not violate the idea of the disclosure, they should also be regarded as the disclosure of the disclosure. For another example, on the premise that there is no conflict, each embodiment described in the disclosure and/or the technical features in each embodiment can be arbitrarily combined with the prior art, and the technical solution obtained after the combination should also fall within the scope of protection of the disclosure.

It should be further understood that in various method embodiments of the present disclosure, sizes of serial numbers of the above processes do not mean a sequence of execution, and the sequence of execution of each process should be determined by its function and internal logic, and should not constitute any limitation on implementation processes of the embodiments of the disclosure.

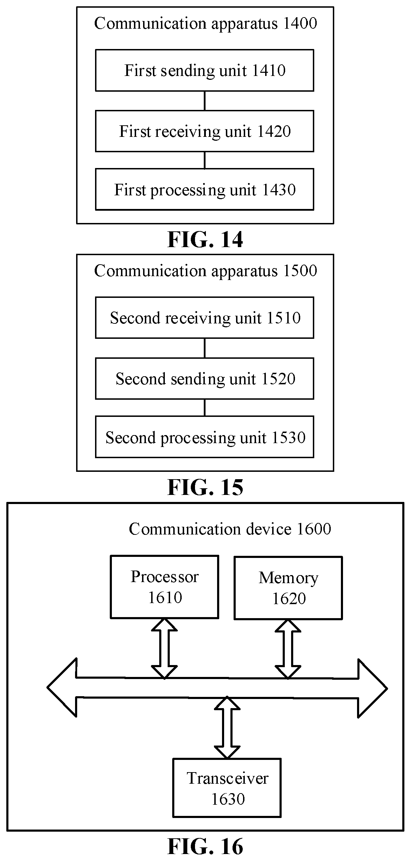

FIG. 14 is a schematic structural diagram of a communication apparatus 1400 according to an embodiment of the disclosure, which is applied to a terminal device. As shown in FIG. 14, the communication apparatus 1400 may include a first sending unit 1410.

The first sending unit 1410 is configured to, in a case where a first event meets a preset condition, send the first event to a network device on a first Physical Uplink Control Channel (PUCCH) resource or a first Physical Uplink Shared Channel (PUSCH) resource, wherein the first event is used by the network device to determine a first serving spatial filter for a first time period.

In some embodiments, as shown in FIG. 14, the communication device 1400 may further include a first receiving unit 1420.

The first sending unit 1410 is further configured to send a first SR to the network device on a second PUCCH resource associated with a first SR occasion, the first SR being used to request the first PUSCH resource.

The first receiving unit 1420 is configured to receive first information sent by the network device, the first information being used to indicate the first PUSCH resource.

In some embodiments, the first SR includes three code points.

A first code point represents that no SR is initiated.

A second code point represents a first type of information carried by the first PUSCH resource, the first type of information comprising high-layer data or a Media Access Control Control Element (MAC CE) of a Media Access Control (MAC) layer.

A third code point represents a second type of information carried by the first PUSCH resource, the second type of information comprising the first event.

In some embodiments, the first transmitting unit 1410 is further configured to send a second SR to the network device on a third PUCCH resource associated with a second SR occasion, the second SR being used to request the first PUCCH resource; and the first receiving unit 1420 is configured to receive second information sent by the network device, the second information being used to indicate the first PUCCH resource.

In some embodiments, the first SR and/or the second SR are configured by RRC signaling.

In some embodiments, the first PUCCH resource or the first PUSCH resource is pre-configured.

In some embodiments, the first PUCCH resource or the first PUSCH resource is a common resource or a dedicated resource.

In some embodiments, in a case where a number of the first PUCCH resources or the first PUSCH resources is multiple, the first receiving unit 1420 is configured to receive third information sent by the network device, the third information being used to indicate one or more first PUCCH resources or first PUSCH resources usable for uplink transmission within a second time period, where a start time of the second time period is earlier than a start time of the first time period.

In some embodiments, the first PUCCH resource or the first PUSCH resource has one or more of following characteristics:
a payload size of the first PUCCH resource or the first PUSCH resource is greater than a first threshold;
the first PUCCH resource or the first PUSCH resource is configured by a broadcast mode, a multicast mode or a unicast mode;
the first PUCCH resource is configured in one or more PUCCH resource sets;
the first PUSCH resource is configured in one or more PUSCH resource sets; and
the first PUCCH resource or the first PUSCH resource is periodic, semi-persistent, or aperiodic.

In some embodiments, one or more of the first information, the second information and the third information is carried by Downlink Control Information (DCI) signaling and/or MAC CE signaling.

In some embodiments, the first sending unit 1410 is further configured to: during a 4-step Random Access Channel (RACH) procedure, send a first Physical Random Access Channel (PRACH) to the network device on a first RACH occasion, the first PRACH being used to request the first PUCCH resource or the first PUSCH resource; and the first receiving unit 1420 is further configured to receive fourth information sent by the network device, the fourth information being used to indicate the first PUCCH resource or the first PUSCH resource.

In some embodiments, the first sending unit 1410 is further configured to: during a 2-step RACH procedure, send a second PRACH and the first event to the network device on a second RACH occasion, the second RACH occasion being related to the first PUCCH resource or the first PUSCH resource.

In some embodiments, the first receiving unit 1420 is further configured to receive fifth information sent by the network device, the fifth information being used to instruct the terminal device to send a second event, and the second event being used by the network device to determine whether the first event meets the preset condition; and the first sending unit 1410 is further configured to send the second event to the network device.

In some embodiments, the first receiving unit 1420 is further configured to receive sixth information sent by the network device, the sixth information being used to indicate the first PUCCH resource or the first PUSCH resource.

In some embodiments, as shown in FIG. 14, the communication device 1400 may further include a first processing unit 1430.

The first processing unit 1430 is configured to: in a case where a number of the first PUCCH resources or the first PUSCH resources is multiple, select one of the first PUCCH resources or the first PUSCH resources based on indexes of a plurality of the first PUCCH resources or the first PUSCH resources; and
the first sending unit 1410 is configured to send the first event to the network device on the one of the first PUCCH resources or the first PUSCH resources,
where the one of the first PUCCH resources or the first PUSCH resources is randomly selected; or,
the one of the first PUCCH resources or the first PUSCH resources has a lowest or highest index.

In some embodiments, the first event comprises one or more of:
an index of a reference signal resource corresponding to a second serving spatial filter;
a link quality of the reference signal resource corresponding to the second serving spatial filter;
an index of a reference signal resource corresponding to a candidate spatial filter;
a link quality of the reference signal resource corresponding to the candidate spatial filter;
a fluctuation range of the link quality of the reference signal resource corresponding to the second serving spatial filter; and
an interference intensity of the candidate spatial filter to the second serving spatial filter,
where the second serving spatial filter is a serving spatial filter for a third time period, and an end time of the third time period is earlier than a start time of the first time period.

In some embodiments, the preset condition comprises one or more of:
a link quality of a reference signal resource corresponding to a second serving spatial filter is greater than a second threshold;
the link quality of the reference signal resource corresponding to the second serving spatial filter is less than or equal to the second threshold;
a link quality of a reference signal resource corresponding to a candidate spatial filter is greater than the link quality of the reference signal resource corresponding to the second serving spatial filter plus an offset value;
the link quality of the reference signal resource corresponding to the candidate spatial filter is greater than a third threshold;
the link quality of the reference signal resource corresponding to the second serving spatial filter is less than or equal to the second threshold, and the link quality of the reference signal resource corresponding to the candidate spatial filter is greater than the third threshold;
a fluctuation range of the link quality of the reference signal resource corresponding to the second serving spatial filter exceeds a preset range; and
an interference intensity of the candidate spatial filter to the second serving spatial filter is greater than a fourth threshold,
where the second serving spatial filter is a serving spatial filter for a third time period, and an end time of the third time period is earlier than a start time of the first time period.

In some embodiments, the second serving spatial filter is the same as the first serving spatial filter, in a case where the preset condition comprises that the link quality of the reference signal resource corresponding to the second serving spatial filter is greater than the second threshold.

In some embodiments, the fluctuation range of the link quality of the reference signal resource corresponding to the second serving spatial filter is: a number of times that the link quality of the reference signal resource corresponding to the second serving spatial filter fluctuates upward or downward at a fifth threshold in a fourth time period, where an end time of the fourth time period is earlier than a start time of the first time period.

In some embodiments, the fluctuation range of the link quality of the reference signal resource corresponding to the second serving spatial filter is: a duration for which the link quality of the reference signal resource corresponding to the second serving spatial filter is higher than or less than a sixth threshold in a fifth time period; or, a ratio of the duration for which the link quality of the reference signal resource corresponding to the second serving spatial filter is higher than or less than the sixth threshold to the fifth time period, where an end time of the fifth time period is earlier than a start time of the first time period.

In some embodiments, the link quality comprises Reference Signal Received Power (RSRP), Signal-to-Interference-plus-Noise Ratio (SINR), Received Signal Strength Indicator (RSSI), Reference Signal Received Quality (RSRQ), or a Block Error Rate (BLER) of a PDCCH.

In some embodiments, the candidate spatial filter belongs to a serving cell and/or a candidate cell.

In some embodiments, the first sending unit 1410 is configured to send first capability information to the network device, the first capability information being used to represent that the terminal device supports acquiring the first event and/or supports sending the first event.

In some embodiments, the first capability information comprises one or more of:
the terminal device supports requesting the first PUSCH resource based on a first SR;
the terminal device supports requesting the first PUCCH resource based on a second SR; and
the terminal device supports requesting the first PUCCH resource or the first PUSCH resource based on a first PRACH.

In some embodiments, the first receiving unit 1420 is further configured to receive seventh information sent by the network device, the seventh information being used to indicate one or more of:
a reference signal resource corresponding to a second serving spatial filter;
a reference signal resource corresponding to a candidate spatial filter;
the first PUCCH resource; and
the first PUSCH resource,
where the second serving spatial filter is a serving spatial filter for a third time period, and an end time of the third time period is earlier than a start time of the first time period.

In some embodiments, the seventh information is related to first capability information.

In some embodiments, the first receiving unit 1420 is further configured to receive a Transmission Configuration Indication (TCI) state sent by the network device, the TCI state being related to the first serving spatial filter.

The embodiment of the disclosure provides a communication apparatus. In a case where a first event meets a preset condition, the apparatus can send the first event to a network device on a first PUCCH resource or a first PUSCH resource. The first event is used by the network device to determine a first serving spatial filter for a first time period. Thus, after determining that the first event meets the preset condition, the apparatus may carry the report of the first event through the first PUCCH resource or the first PUSCH resource. In this way, the apparatus can actively report the first event, thereby reducing both the reporting overhead and the configuration overhead without delaying the switching of the serving spatial filter.

Those skilled in the art should understand that the related description of the above-described communication apparatuses according to the embodiments of the disclosure can be understood with reference to the related description of the communication methods according to the embodiments of the disclosure.

FIG. 15 is a schematic structural diagram of a communication apparatus 1500 according to an embodiment of the disclosure, which is applied to a network device. As shown in FIG. 15, the communication apparatus 1500 may include a second receiving unit 1510.

The second receiving unit 1510 is configured to receive, on a first PUCCH resource or a first PUSCH resource, a first event sent by a terminal device, the first event meeting a preset condition, and the first event being used by the network device to determine a first serving spatial filter for a first time period.

In some embodiments, as shown in FIG. 15, the communication device 1500 may further include a second sending unit 1520.

The second receiving unit 1510 is further configured to receive, on a second PUCCH resource associated with a first Scheduling Request (SR) occasion, a first SR sent by the terminal device, the first SR being used to request the first PUSCH resource.

The second sending unit 1520 is configured to send first information to the terminal device, the first information being used to indicate the first PUSCH resource.

In some embodiments, the first SR includes three code points.

A first code point represents that no SR is initiated.

A second code point represents a first type of information carried by the first PUSCH resource, the first type of information comprising high-layer data or a Media Access Control Control Element (MAC CE) of a Media Access Control (MAC) layer.

A third code point represents a second type of information carried by the first PUSCH resource, the second type of information comprising the first event.

In some embodiments, the second receiving unit 1510 is further configured to receive, on a third PUCCH resource associated with a second SR occasion, a second SR sent by the terminal device, the second SR being used to request the first PUCCH resource; and the second sending unit 1520 is further configured to send second information to the terminal device, the second information being sued to indicate the first PUCCH resource.

In some embodiments, the first SR and/or the second SR are configured by RRC signaling.

In some embodiments, the first PUCCH resource or the first PUSCH resource is pre-configured.

In some embodiments, the first PUCCH resource or the first PUSCH resource is a common resource or a dedicated resource.

In some embodiments, the second sending unit 1520 is further configured to: in a case where a number of the first PUCCH resources or the first PUSCH resources is multiple, send third information to the terminal device, the third information being used to indicate one or more first PUCCH resources or first PUSCH resources usable for uplink transmission within a second time period, where a start time of the second time period is earlier than a start time of the first time period.

In some embodiments, the first PUCCH resource or the first PUSCH resource has one or more of following characteristics:
a payload size of the first PUCCH resource or the first PUSCH resource is greater than a first threshold;
the first PUCCH resource or the first PUSCH resource is configured by a broadcast mode, a multicast mode or a unicast mode;
the first PUCCH resource is configured in one or more PUCCH resource sets; and
the first PUSCH resource is configured in one or more PUSCH resource sets; and
the first PUCCH resource or the first PUSCH resource is periodic, semi-persistent, or aperiodic.

In some embodiments, one or more of the first information, the second information and the third information is carried by Downlink Control Information (DCI) signaling and/or MAC CE signaling.

In some embodiments, the second receiving unit 1510 is further configured to: during a 4-step Random Access Channel (RACH) procedure, receive, on a first RACH occasion, a first Physical Random Access Channel (PRACH) sent by the terminal device, the first PRACH being used to request the first PUCCH resource or the first PUSCH resource; and the second sending unit 1520 is further configured to send fourth information to the terminal device, the fourth information being used to indicate the first PUCCH resource or the first PUSCH resource.

In some embodiments, the second receiving unit 1510 is further configured to: during a 2-step RACH procedure, receive, on a second RACH occasion, a second PRACH and the first event sent by the terminal device, the second RACH occasion being related to the first PUCCH resource or the first PUSCH resource.

In some embodiments, the second sending unit 1520 is further configured to send fifth information to the terminal device, the fifth information being used to instruct the terminal device to send a second event, and the second event being used by the network device to determine whether the first event meets the preset condition; and the second receiving unit 1510 is further configured to receive the second event sent by the terminal device.

In some embodiments, as shown in FIG. 15, the communication device 1500 may further include a second processing unit 1530.

The second processing unit 1530 is configured to determine, based on the second event, that the first event meets the preset condition.

The second sending unit 1520 is further configured to send sixth information to the terminal device, the sixth information being used to indicate the first PUCCH resource or the first PUSCH resource.

In some embodiments, the second processing unit 1530 is further configured to: determine, based on the second event, a confidence level that the first event meets the preset condition; and determine that the first event meets the preset condition in a case where the confidence level is greater than a seventh threshold.

In some embodiments, the second processing unit 1530 is further configured to input the second event into a first model, and determine that the first event meets the preset condition.

In some embodiments, the second receiving unit 1510 is further configured to: in a case where a number of the first PUCCH resources or the first PUSCH resources is multiple, receive, on one of the first PUCCH resources or the first PUSCH resources, the first event sent by the terminal device,
where the one of the first PUCCH resources or the first PUSCH resources is randomly selected; or,
the one of the first PUCCH resources or the first PUSCH resources has a lowest or highest index.

In some embodiments, the first event comprises one or more of:
an index of a reference signal resource corresponding to a second serving spatial filter;
a link quality of the reference signal resource corresponding to the second serving spatial filter;
an index of a reference signal resource corresponding to a candidate spatial filter;
a link quality of the reference signal resource corresponding to the candidate spatial filter;
a fluctuation range of the link quality of the reference signal resource corresponding to the second serving spatial filter; and
an interference intensity of the candidate spatial filter to the second serving spatial filter,
where the second serving spatial filter is a serving spatial filter for a third time period, and an end time of the third time period is earlier than a start time of the first time period.

In some embodiments, the preset condition comprises one or more of:
a link quality of a reference signal resource corresponding to a second serving spatial filter is greater than a second threshold;
the link quality of the reference signal resource corresponding to the second serving spatial filter is less than or equal to the second threshold;
a link quality of a reference signal resource corresponding to a candidate spatial filter is greater than the link quality of the reference signal resource corresponding to the second serving spatial filter plus an offset value;
the link quality of the reference signal resource corresponding to the candidate spatial filter is greater than a third threshold;
the link quality of the reference signal resource corresponding to the second serving spatial filter is less than or equal to the second threshold, and the link quality of the reference signal resource corresponding to the candidate spatial filter is greater than the third threshold;
a fluctuation range of the link quality of the reference signal resource corresponding to the second serving spatial filter exceeds a preset range; and
an interference intensity of the candidate spatial filter to the second serving spatial filter is greater than a fourth threshold,
where the second serving spatial filter is a serving spatial filter for a third time period, and an end time of the third time period is earlier than a start time of the first time period.

In some embodiments, the second serving spatial filter is the same as the first serving spatial filter, in a case where the preset condition comprises that the link quality of the reference signal resource corresponding to the second serving spatial filter is greater than the second threshold.

In some embodiments, the fluctuation range of the link quality of the reference signal resource corresponding to the second serving spatial filter is: a number of times that the link quality of the reference signal resource corresponding to the second serving spatial filter fluctuates upward or downward at a fifth threshold in a fourth time period, where an end time of the fourth time period is earlier than a start time of the first time period.

In some embodiments, the fluctuation range of the link quality of the reference signal resource corresponding to the second serving spatial filter is: a duration for which the link quality of the reference signal resource corresponding to the second serving spatial filter is higher than or less than a sixth threshold in a fifth time period; or, a ratio of the duration for which the link quality of the reference signal resource corresponding to the second serving spatial filter is higher than or less than the sixth threshold to the fifth time period, where an end time of the fifth time period is earlier than a start time of the first time period.

In some embodiments, the link quality comprises Reference Signal Received Power (RSRP), Signal-to-Interference-plus-Noise Ratio (SINR), Received Signal Strength Indicator (RSSI), Reference Signal Received Quality (RSRQ), or a Block Error Rate (BLER) of a PDCCH.

In some embodiments, the candidate spatial filter belongs to a serving cell and/or a candidate cell.

In some embodiments, the second receiving unit 1510 is further configured to receive first capability information sent by the terminal device, the first capability information being used to represent that the terminal device supports acquiring the first event and/or supports sending the first event.

In some embodiments, the first capability information comprises one or more of:
the terminal device supports requesting the first PUSCH resource based on a first SR;
the terminal device supports requesting the first PUCCH resource based on a second SR; and
the terminal device supports requesting the first PUCCH resource or the first PUSCH resource based on a first PRACH.

In some embodiments,
seventh information sent by the network device is received, the seventh information being used to indicate one or more of:
a reference signal resource corresponding to a second serving spatial filter;
a reference signal resource corresponding to a candidate spatial filter;
the first PUCCH resource,
the first PUSCH resource,
where the second serving spatial filter is a serving spatial filter for a third time period, and an end time of the third time period is earlier than a start time of the first time period.

In some embodiments, the seventh information is related to first capability information.

In some embodiments, the second sending unit 1520 is further configured to send a Transmission Configuration Indication (TCI) state to the terminal device, the TCI state being related to the first serving space filter.

The embodiment of the disclosure provides a communication apparatus. The apparatus may receive, on a first PUCCH resource or a first PUSCH resource, a first event sent by a terminal device, the first event meeting a preset condition, and the first event being used by the network device to determine a first serving space filter for a first time period. Thus, the reporting overhead and the configuration overhead are reduced, and the switching of the serving spatial filter by the terminal device is not delayed.

Those skilled in the art should understand that the related description of the above-described communication apparatuses according to the embodiments of the disclosure can be understood with reference to the related description of the communication methods according to the embodiments of the disclosure.

FIG. 16 is a schematic structural diagram of a communication device according to an embodiment of the disclosure. The communication device 1600 may be a terminal device or a network device. The communication device 1600 shown in FIG. 16 may include a processor 1610, a memory 1620, and a transceiver 1630.

The memory 1620 is configured to store a computer program.

The processor 1610, connected with the memory 1620, is configured to invoke and run a computer program from the memory 1620 to perform the method in the embodiments of the present disclosure.

The transceiver 1630, also referred to as a communication interface, is configured to receive and send information in the process of sending and receiving the information to or from another external device.

In some embodiments, the memory 1620 may be a separate device independent of the processor 1610, or it may be integrated within the processor 1610.

In some embodiments, the transceiver 1630 may include an input interface. The processor 1610 may control the input interface to communicate with another external device, specifically, may receive information or data sent by another external device.

In some embodiments, the transceiver 1630 may include an output interface. The processor 1610 may control the output interface to communicate with another external device, specifically, may send information or data to another external device.

In some embodiments, the transceiver 1630 may include a transmitter and a receiver. The transceiver 1630 may further include antennas, and the number of antennas may be one or more.

In some embodiments, the communication device 1600 may be applied to the network device of the embodiments of the disclosure, and the communication device 1600 may perform corresponding procedures performed by the network device in each method of the embodiments of the disclosure, which will not be repeated here for the sake of brevity.

In some embodiments, the communication device 1600 may be applied to the terminal device of the embodiments of the disclosure, and the communication device 1600 may perform corresponding procedures performed by the terminal in each method of the embodiments of the disclosure, which will not be repeated here for the sake of brevity.

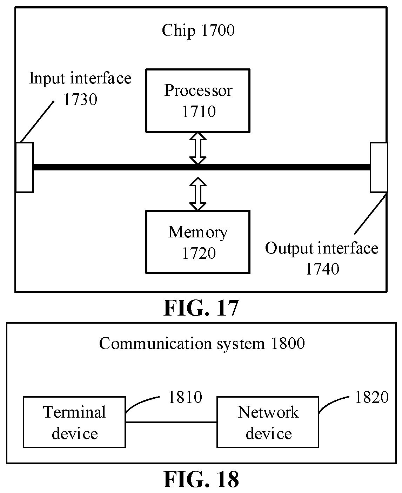

FIG. 17 is a schematic structural diagram of a chip according to an embodiment of the disclosure. The chip 1700 shown in FIG. 17 includes a processor 1710 that can invoke and run a computer program from a memory to perform the method in the embodiments of the disclosure.

In some embodiments, as shown in FIG. 17, the chip 1700 may further include a memory 1720. The processor 1710 may invoke and run a computer program from the memory 1720 to perform the method in the embodiments of the disclosure.

The memory 1720 can be a separate device independent of the processor 1710, or it can be integrated within the processor 1710.

In some embodiments, the chip 1700 may include an input interface 1730. The processor 1710 may control the input interface 1730 to communicate with other devices or chips, specifically, may acquire information or data transmitted by other devices or chips.

In some embodiments, the chip 1700 may include an output interface 1740. The processor 1710 may control the output interface 1740 to communicate with other devices or chips, specifically, may output information or data to other devices or chips.

In some embodiments, the chip may be applied to the terminal device of the embodiments of the disclosure, and the chip may perform corresponding procedures performed by the terminal in each method of the embodiments of the disclosure, which will not be repeated here for the sake of brevity.

In some embodiments, the chip can be applied to the network device in the embodiments of the disclosure, and the chip can perform corresponding procedures performed by the network device in each method of the embodiments of the disclosure. For brevity, details thereof are not repeated here.

It should be understood that the chip mentioned in the embodiments of the disclosure may also be referred to as system-level chip, system chip, chip system, or System-on-Chip (SoC), among other terms.

FIG. 18 is a schematic block diagram of a communication system according to an embodiment of the disclosure. As shown in FIG. 18, the communication system 1800 includes a terminal device 1810 and a network device 1820.

The terminal device 1810 may be used to implement the corresponding functions implemented by the terminal device in the above-described method, and the network device 1820 may be used to implement the corresponding functions implemented by the network device in the above-described method. For brevity, details thereof are not repeated here.

It should be understood that the processor of the embodiments of the disclosure may be an integrated circuit chip having signal processing capabilities. In the implementation process, the steps of the above-described method embodiments may be performed by integrated logic circuits of hardware in the processor or instructions in the form of software. The processor may be a general purpose processor, a Digital Signal Processor (DSP), an Application Specific Integrated Circuit (ASIC), a Field Programmable Gate Array (FPGA) or other programmable logic device, a discrete gate or transistor logic device, or a discrete hardware component. The methods, steps, and logical block diagrams disclosed in the embodiments of the disclosure may be implemented or executed. The general-purpose processor may be a microprocessor, or the processor may be any conventional processor or the like. The steps of the method disclosed in the embodiments of the disclosure may be directly embodied as execution by a hardware decoding processor, or execution by hardware and software modules in the decoding processor. The software module may be located in a mature storage medium in the art, such as random access memory, flash memory, read-only memory, programmable read-only memory, electrically erasable and writable programmable memory, or register, etc. The storage medium is located in the memory, and the processor reads the information in the memory, and performs the steps of the above methods in combination with its hardware.

It can be understood that the memory in the embodiments of the disclosure may be either volatile memory or non-volatile memory, or may include both volatile and non-volatile memories. The non-volatile memory can be Read-Only Memory (ROM), Programmable ROM (PROM), Erasable Programmable ROM (EPROM), Electrically Erasable Programmable ROM (EEPROM), or Flash memory. The volatile memory can be Random Access Memory (RAM), which serves as external high-speed cache. By way of illustration, but not by way of limitation, many forms of RAM are available, such as Static Random Access Memory (SRAM), Dynamic Random Access Memory (DRAM), Synchronous Dynamic Random Access Memory (SDRAM), Double Data Rate Synchronous Dynamic Random Access Memory (DDR SDRAM), Enhanced Synchronous Dynamic Random Access Memory (ESDRAM), Synchlink Dynamic Random Access Memory (SLDRAM), and Direct Rambus Random Access Memory (DR RAM). It should be noted that the memory of the systems and methods described herein is intended to include, but is not limited to, these and any other suitable type of memory.

It should be understood that the above memory is illustrative but not limiting, for example, the memory in the embodiments of the disclosure may also be Static Random Access Memory (SRAM), Dynamic Random Access Memory (DRAM), Synchronous Dynamic Random Access Memory (SDRAM), Double Data Rate Synchronous Dynamic Random Access Memory (DDR SDRAM), Enhanced Synchronous Dynamic Random Access Memory (ESDRAM), SynchLink Dynamic Random Access Memory (SLDRAM), Direct Rambus Random Access Memory (DR RAM), and so on. In other words, the memory in the embodiments of the disclosure is intended to include, but is not limited to, these and any other suitable types of memory.

Embodiments of the disclosure provide a computer-readable storage medium having stored thereon a computer program that, when executed by at least one processor, implements the methods in the embodiments of the disclosure.

In some embodiments, the computer-readable storage medium can be applied to the network device in the embodiments of the disclosure, and the computer program enables the computer to perform corresponding procedures performed by the network device in various methods described in the embodiments of the disclosure. For brevity, details thereof are not repeated here.

In some embodiments, the computer-readable storage medium can be applied to the terminal device in the embodiments of the disclosure, and the computer program enables the computer to perform corresponding procedures performed by the terminal device in various methods described in the embodiments of the disclosure. For brevity, details thereof are not repeated here.

Embodiments of the disclosure also provide a computer program product including a computer storage medium storing a computer program including instructions executable by at least one processor that, when executed by the at least one processor, implement the methods in the embodiment of the disclosure.

In some embodiments, the computer program product can be applied to the network device in the embodiments of the disclosure, and the computer program instructions enable the computer to perform the corresponding procedures performed by the network device in various methods described in the embodiments of the disclosure. For brevity, details thereof are not repeated here.

In some embodiments, the computer program product can be applied to the terminal device in the embodiments of the disclosure, and the computer program instructions enable the computer to perform the corresponding procedures performed by the terminal device in various methods described in the embodiments of the disclosure. For brevity, details thereof are not repeated here.

Embodiments of the disclosure also provide a computer program that causes a computer to perform the methods in the embodiments of the disclosure.

In some embodiments, the computer program can be applied to the network device in the embodiments of the disclosure, and the computer program, when run on a computer, enables the computer to perform corresponding procedures performed by the network device in various methods described in the embodiments of the disclosure. For brevity, details thereof are not repeated here.

In some embodiments, the computer program can be applied to the terminal device in the embodiments of the disclosure, and when run on a computer, the computer program enables the computer to perform the corresponding procedures performed by the terminal device in various methods described in the embodiments of the disclosure. For brevity, details thereof are not repeated here.

Those of ordinary skill in the art will appreciate that the units and algorithmic steps of the various examples described in the embodiments disclosed herein can be implemented in electronic hardware, in computer software, or in a combination of computer software and electronic hardware. Whether these functions are performed in hardware or software depends on the specific application and design constraints of the technical solution. Those skilled in the art may use different methods for implementing the described functions for each particular application, but such implementations should not be considered as going beyond the scope of the disclosure.

Those skilled in the art can clearly understand that for convenience and conciseness of the description, for the specific working processes of the systems, devices, and units described above, reference may be made to the corresponding processes in the aforementioned method embodiments, which will not be repeatedly described herein.

In the several embodiments provided in the present disclosure, it is to be understood that the disclosed systems, devices and method may be implemented in other modes. For example, the device embodiments described above are only schematic, and for example, division of the units is only logic function division, and other division manners may be adopted during practical implementation. For example, multiple units or components may be combined or integrated into another system, or some features may be neglected or not executed. In addition, the displayed or discussed mutual couplings or direct couplings or communication connections may be implemented by using some interfaces. The indirect couplings or communication connections between the devices or units may be implemented in electronic, mechanical, or other forms.

The units described as separate components may or may not be physically separated, and the components displayed as units may or may not be physical units, and may be located in one place or may be distributed over multiple network units. Some or all of the units may be selected according to actual needs to achieve the objectives of the solutions of the embodiments of the present disclosure.

In addition, functional units in various embodiments of the disclosure may be integrated into one processing unit, or each of the units may be physically separated, or two or more units may be integrated into one unit.

When the aforementioned functions are implemented in the form of software functional units and sold or used as independent products, the software functional units can be stored in a computer-readable storage medium. Based on this understanding, the core or contributory part of the technical solution of the disclosure with respect to the prior part, or portions thereof, can be embodied in the form of a software product. This computer software product is stored in a storage medium and includes several instructions that enable a computer device (which can be a personal computer, server, network device, etc.) to perform all or part of the steps described in the various embodiments of the disclosure. The storage medium includes various media capable of storing program codes, such as USB flash drive, mobile hard disk, Read-Only Memory (ROM), Random Access Memory (RAM), magnetic disk or an optical disk.

What described above are only the specific implementations of the present disclosure, but the scope of protection of the disclosure is not limited thereto. Any variation or replacement readily figured out by a person skilled in the art within the technical scope disclosed in the disclosure shall fall within the scope of protection of the disclosure. Therefore, the scope of protection of the disclosure is defined by the scope of protection of the claims.

## Claims

1. A communication method, applied to a terminal device, the method comprising:
in a case where a first event meets a preset condition, sending the first event to a network device on a first Physical Uplink Control Channel (PUCCH) resource or a first Physical Uplink Shared Channel (PUSCH) resource, wherein the first event is used by the network device to determine a first serving spatial filter for a first time period.

2. The method of claim 1, further comprising:
sending a first Scheduling Request (SR) to the network device on a second PUCCH resource associated with a first SR occasion, the first SR being used to request the first PUSCH resource; and
receiving first information sent by the network device, the first information being used to indicate the first PUSCH resource.

3. The method of claim 2, wherein the first SR comprises three code points,
wherein a first code point represents that no SR is initiated;
a second code point represents a first type of information carried by the first PUSCH resource, the first type of information comprising high-layer data or a Media Access Control Control Element (MAC CE) of a Media Access Control (MAC) layer; and
a third code point represents a second type of information carried by the first PUSCH resource, the second type of information comprising the first event.

4. The method of any one of claims 1 to 3, further comprising:
sending a second SR to the network device on a third PUCCH resource associated with a second SR occasion, the second SR being used to request the first PUCCH resource; and
receiving second information sent by the network device, the second information being used to indicate the first PUCCH resource.

5. The method of claim 2 or 4, wherein the first SR and/or the second SR are configured by Radio Resource Control (RRC) signaling.

6. The method of any one of claims 1 to 5, wherein the first PUCCH resource or the first PUSCH resource is pre-configured.

7. The method of claim 6, wherein the first PUCCH resource or the first PUSCH resource is a common resource or a dedicated resource.

8. The method of claim 6 or 7, further comprising: in a case where a number of the first PUCCH resources or the first PUSCH resources is multiple,
receiving third information sent by the network device, the third information being used to indicate one or more first PUCCH resources or first PUSCH resources usable for uplink transmission within a second time period, wherein a start time of the second time period is earlier than a start time of the first time period.

9. The method of any one of claims 6 to 8, wherein the first PUCCH resource or the first PUSCH resource has one or more of following characteristics:
a payload size of the first PUCCH resource or the first PUSCH resource is greater than a first threshold;
the first PUCCH resource or the first PUSCH resource is configured by a broadcast mode, a multicast mode or a unicast mode;
the first PUCCH resource is configured in one or more PUCCH resource sets;
the first PUSCH resource is configured in one or more PUSCH resource sets; and
the first PUCCH resource or the first PUSCH resource is periodic, semi-persistent, or aperiodic.

10. The method of any one of claims 2 to 9, wherein
one or more of the first information, the second information and the third information is carried by Downlink Control Information (DCI) signaling and/or MAC CE signaling.

11. The method of any one of claims 1 to 10, further comprising:
during a 4-step Random Access Channel (RACH) procedure, sending a first Physical Random Access Channel (PRACH) to the network device on a first RACH occasion, the first PRACH being used to request the first PUCCH resource or the first PUSCH resource;
receiving fourth information sent by the network device, the fourth information being used to indicate the first PUCCH resource or the first PUSCH resource.

12. The method of any one of claims 1 to 11, wherein sending the first event to the network device comprises:
during a 2-step RACH procedure, sending a second PRACH and the first event to the network device on a second RACH occasion, the second RACH occasion being related to the first PUCCH resource or the first PUSCH resource.

13. The method of any one of claims 1 to 12, further comprising:
receiving fifth information sent by the network device, the fifth information being used to instruct the terminal device to send a second event, and the second event being used by the network device to determine whether the first event meets the preset condition; and
sending the second event to the network device.

14. The method of claim 13, further comprising:
receiving sixth information sent by the network device, the sixth information being used to indicate the first PUCCH resource or the first PUSCH resource.

15. The method of any one of claims 1 to 14, wherein in a case where a number of the first PUCCH resources or the first PUSCH resources is multiple, sending the first event to the network device on the first PUCCH resource or the first PUSCH resource comprises:
selecting one of the first PUCCH resources or the first PUSCH resources based on indexes of a plurality of the first PUCCH resources or the first PUSCH resources; and
sending the first event to the network device on the one of the first PUCCH resources or the first PUSCH resources,
wherein the one of the first PUCCH resources or the first PUSCH resources is randomly selected; or,
the one of the first PUCCH resources or the first PUSCH resources has a lowest or highest index.

16. The method of any one of claims 1 to 15, wherein the first event comprises one or more of:
an index of a reference signal resource corresponding to a second serving spatial filter;
a link quality of the reference signal resource corresponding to the second serving spatial filter;
an index of a reference signal resource corresponding to a candidate spatial filter;
a link quality of the reference signal resource corresponding to the candidate spatial filter;
a fluctuation range of the link quality of the reference signal resource corresponding to the second serving spatial filter; and
an interference intensity of the candidate spatial filter to the second serving spatial filter,
wherein the second serving spatial filter is a serving spatial filter for a third time period, and an end time of the third time period is earlier than a start time of the first time period.

17. The method of any one of claims 1 to 16, wherein the preset condition comprises one or more of:
a link quality of a reference signal resource corresponding to a second serving spatial filter is greater than a second threshold;
the link quality of the reference signal resource corresponding to the second serving spatial filter is less than or equal to the second threshold;
a link quality of a reference signal resource corresponding to a candidate spatial filter is greater than the link quality of the reference signal resource corresponding to the second serving spatial filter plus an offset value;
the link quality of the reference signal resource corresponding to the candidate spatial filter is greater than a third threshold;
the link quality of the reference signal resource corresponding to the second serving spatial filter is less than or equal to the second threshold, and the link quality of the reference signal resource corresponding to the candidate spatial filter is greater than the third threshold;
a fluctuation range of the link quality of the reference signal resource corresponding to the second serving spatial filter exceeds a preset range; and
an interference intensity of the candidate spatial filter to the second serving spatial filter is greater than a fourth threshold;
wherein the second serving spatial filter is a serving spatial filter for a third time period, and an end time of the third time period is earlier than a start time of the first time period.

18. The method of claim 17, wherein the second serving spatial filter is the same as the first serving spatial filter, in a case where the preset condition comprises that the link quality of the reference signal resource corresponding to the second serving spatial filter is greater than the second threshold.

19. The method of any one of claims 16 to 18, wherein the fluctuation range of the link quality of the reference signal resource corresponding to the second serving spatial filter is:
a number of times that the link quality of the reference signal resource corresponding to the second serving spatial filter fluctuates upward or downward at a fifth threshold in a fourth time period, wherein an end time of the fourth time period is earlier than a start time of the first time period.

20. The method of any one of claims 16 to 18, wherein the fluctuation range of the link quality of the reference signal resource corresponding to the second serving spatial filter is:
a duration for which the link quality of the reference signal resource corresponding to the second serving spatial filter is higher than or less than a sixth threshold in a fifth time period; or,
a ratio of the duration for which the link quality of the reference signal resource corresponding to the second serving spatial filter is higher than or less than the sixth threshold to the fifth time period,
wherein an end time of the fifth time period is earlier than a start time of the first time period.

21. The method of any one of claims 16 to 20, wherein the link quality comprises Reference Signal Received Power (RSRP), Signal-to-Interference-plus-Noise Ratio (SINR), Received Signal Strength Indicator (RSSI), Reference Signal Received Quality (RSRQ), and/or a Block Error Rate (BLER) of a PDCCH.

22. The method of any one of claims 16 to 21, wherein the candidate spatial filter belongs to a serving cell and/or a candidate cell.

23. The method of any one of claims 1 to 22, further comprising:
sending first capability information to the network device, the first capability information being used to represent that the terminal device supports acquiring the first event and/or supports sending the first event.

24. The method of claim 23, wherein the first capability information comprises one or more of:
the terminal device supports requesting the first PUSCH resource based on a first SR;
the terminal device supports requesting the first PUCCH resource based on a second SR; and
the terminal device supports requesting the first PUCCH resource or the first PUSCH resource based on a first PRACH.

25. The method of any one of claims 1 to 24, further comprising:
receiving seventh information sent by the network device, the seventh information being used to indicate one or more of:
a reference signal resource corresponding to a second serving spatial filter;
a reference signal resource corresponding to a candidate spatial filter;
the first PUCCH resource; and
the first PUSCH resource,
wherein the second serving spatial filter is a serving spatial filter for a third time period, and an end time of the third time period is earlier than a start time of the first time period.

26. The method of claim 25, wherein the seventh information is related to first capability information.

27. The method of any one of claims 1 to 26, further comprising:
receiving a Transmission Configuration Indication (TCI) state sent by the network device, the TCI state being related to the first serving spatial filter.

28. A communication method, applied to a network device, the method comprising:
receiving, on a first Physical Uplink Control Channel (PUCCH) resource or a first Physical Uplink Shared Channel (PUSCH) resource, a first event sent by a terminal device, the first event meeting a preset condition, and the first event being used by the network device to determine a first serving space filter for a first time period.

29. The method of claim 28, further comprising:
receiving, on a second PUCCH resource associated with a first Scheduling Request (SR) occasion, a first SR sent by the terminal device, the first SR being used to request the first PUSCH resource; and
sending first information to the terminal device, the first information being used to indicate the first PUSCH resource.

30. The method of claim 29, wherein the first SR comprises three code points,
wherein a first code point represents that no SR is initiated;
a second code point represents a first type of information carried by the first PUSCH resource, the first type of information comprising high-layer data or a Media Access Control Control Element (MAC CE) of a Media Access Control (MAC) layer; and
a third code point represents a second type of information carried by the first PUSCH resource, the second type of information comprising the first event.

31. The method of any one of claims 28 to 30, further comprising:
receiving, on a third PUCCH resource associated with a second SR occasion, a second SR sent by the terminal device, the second SR being used to request the first PUCCH resource; and
sending second information to the terminal device, the second information being sued to indicate the first PUCCH resource.

32. The method of claim 29 or 31, wherein the first SR and/or the second SR are configured by Radio Resource Control (RRC) signaling.

33. The method of any one of claims 28 to 32, wherein the first PUCCH resource or the first PUSCH resource is pre-configured.

34. The method of claim 33, wherein the first PUCCH resource or the first PUSCH resource is a common resource or a dedicated resource.

35. The method of claim 33 or 34, further comprising: in a case where a number of the first PUCCH resources or the first PUSCH resources is multiple,
sending third information to the terminal device, the third information being used to indicate one or more first PUCCH resources or first PUSCH resources usable for uplink transmission within a second time period, wherein a start time of the second time period is earlier than a start time of the first time period.

36. The method of any one of claims 33 to 35, wherein the first PUCCH resource or the first PUSCH resource has one or more of following characteristics:
a payload size of the first PUCCH resource or the first PUSCH resource is greater than a first threshold;
the first PUCCH resource or the first PUSCH resource is configured by a broadcast mode, a multicast mode or a unicast mode;
the first PUCCH resource is configured in one or more PUCCH resource sets; and
the first PUSCH resource is configured in one or more PUSCH resource sets; and
the first PUCCH resource or the first PUSCH resource is periodic, semi-persistent, or aperiodic.

37. The method of any one of claims 29 to 36, wherein
one or more of the first information, the second information and the third information is carried by Downlink Control Information (DCI) signaling and/or MAC CE signaling.

38. The method of any one of claims 28 to 37, further comprising:
during a 4-step Random Access Channel (RACH) procedure, receiving, on a first RACH occasion, a first Physical Random Access Channel (PRACH) sent by the terminal device, the first PRACH being used to request the first PUCCH resource or the first PUSCH resource; and
sending fourth information to the terminal device, the fourth information being used to indicate the first PUCCH resource or the first PUSCH resource.

39. The method of any one of claims 28 to 38, wherein receiving the first event sent by the terminal device comprises:
during a 2-step RACH procedure, receiving, on a second RACH occasion, a second PRACH and the first event sent by the terminal device, the second RACH occasion being related to the first PUCCH resource or the first PUSCH resource.

40. The method of any one of claims 28 to 39, further comprising:
sending fifth information to the terminal device, the fifth information being used to instruct the terminal device to send a second event, and the second event being used by the network device to determine whether the first event meets the preset condition; and
receiving the second event sent by the terminal device.

41. The method of claim 40, further comprising:
determining, based on the second event, that the first event meets the preset condition; and
sending sixth information to the terminal device, the sixth information being used to indicate the first PUCCH resource or the first PUSCH resource.

42. The method of claim 41, wherein determining, based on the second event, that the first event meets the preset condition comprises:
determining, based on the second event, a confidence level that the first event meets the preset condition; and
determining that the first event meets the preset condition in a case where the confidence level is greater than a seventh threshold.

43. The method of claim 41 or 42, wherein determining, based on the second event, that the first event meets the preset condition comprises:
inputting the second event into a first model, and determining that the first event meets the preset condition.

44. The method of any one of claims 28 to 43, wherein in a case where a number of the first PUCCH resources or the first PUSCH resources is multiple, receiving, on the first PUCCH resource or the first PUSCH resource, the first event sent by the terminal device comprises:
receiving, on one of the first PUCCH resources or the first PUSCH resources, the first event sent by the terminal device,
wherein the one of the first PUCCH resources or the first PUSCH resources is randomly selected; or,
the one of the first PUCCH resources or the first PUSCH resources has a lowest or highest index.

45. The method of any one of claims 28 to 44, wherein the first event comprises one or more of:
an index of a reference signal resource corresponding to a second serving spatial filter;
a link quality of the reference signal resource corresponding to the second serving spatial filter;
an index of a reference signal resource corresponding to a candidate spatial filter;
a link quality of the reference signal resource corresponding to the candidate spatial filter;
a fluctuation range of the link quality of the reference signal resource corresponding to the second serving spatial filter; and
an interference intensity of the candidate spatial filter to the second serving spatial filter,
wherein the second serving spatial filter is a serving spatial filter for a third time period, and an end time of the third time period is earlier than a start time of the first time period.

46. The method of any one of claims 28 to 45, wherein the preset condition comprises one or more of:
a link quality of a reference signal resource corresponding to a second serving spatial filter is greater than a second threshold;
the link quality of the reference signal resource corresponding to the second serving spatial filter is less than or equal to the second threshold;
a link quality of a reference signal resource corresponding to a candidate spatial filter is greater than the link quality of the reference signal resource corresponding to the second serving spatial filter plus an offset value;
the link quality of the reference signal resource corresponding to the candidate spatial filter is greater than a third threshold;
the link quality of the reference signal resource corresponding to the second serving spatial filter is less than or equal to the second threshold, and the link quality of the reference signal resource corresponding to the candidate spatial filter is greater than the third threshold;
a fluctuation range of the link quality of the reference signal resource corresponding to the second serving spatial filter exceeds a preset range; and
an interference intensity of the candidate spatial filter to the second serving spatial filter is greater than a fourth threshold;
wherein the second serving spatial filter is a serving spatial filter for a third time period, and an end time of the third time period is earlier than a start time of the first time period.

47. The method of claim 46, wherein the second serving spatial filter is the same as the first serving spatial filter, in a case where the preset condition comprises that the link quality of the reference signal resource corresponding to the second serving spatial filter is greater than the second threshold.

48. The method of any one of claims 45 to 47, wherein the fluctuation range of the link quality of the reference signal resource corresponding to the second serving spatial filter is:
a number of times that the link quality of the reference signal resource corresponding to the second serving spatial filter fluctuates upward or downward at a fifth threshold in a fourth time period, wherein an end time of the fourth time period is earlier than a start time of the first time period.

49. The method of any one of claims 45 to 47, wherein the fluctuation range of the link quality of the reference signal resource corresponding to the second serving spatial filter is:
a duration for which the link quality of the reference signal resource corresponding to the second serving spatial filter is higher than or less than a sixth threshold in a fifth time period; or,
a ratio of the duration for which the link quality of the reference signal resource corresponding to the second serving spatial filter is higher than or less than the sixth threshold to the fifth time period,
wherein an end time of the fifth time period is earlier than a start time of the first time period.

50. The method of any one of claims 45 to 49, wherein the link quality comprises Reference Signal Received Power (RSRP), Signal-to-Interference-plus-Noise Ratio (SINR), Received Signal Strength Indicator (RSSI), Reference Signal Received Quality (RSRQ), and/or a Block Error Rate (BLER) of a PDCCH.

51. The method of any one of claims 45 to 50, wherein the candidate spatial filter belongs to a serving cell and/or a candidate cell.

52. The method of any one of claims 28 to 51, further comprising:
receiving first capability information sent by the terminal device, the first capability information being used to represent that the terminal device supports acquiring the first event and/or supports sending the first event.

53. The method of claim 52, wherein the first capability information comprises one or more of:
the terminal device supports requesting the first PUSCH resource based on a first SR;
the terminal device supports requesting the first PUCCH resource based on a second SR; and
the terminal device supports requesting the first PUCCH resource or the first PUSCH resource based on a first PRACH.

54. The method of any one of claims 28 to 53, further comprising:
receiving seventh information sent by the network device, the seventh information being used to indicate one or more of:
a reference signal resource corresponding to a second serving spatial filter;
a reference signal resource corresponding to a candidate spatial filter;
the first PUCCH resource,
the first PUSCH resource,
wherein the second serving spatial filter is a serving spatial filter for a third time period, and an end time of the third time period is earlier than a start time of the first time period.

55. The method of claim 54, wherein the seventh information is related to first capability information.

56. The method of any one of claims 28 to 55, further comprising:
sending a Transmission Configuration Indication (TCI) state to the terminal device, the TCI state being related to the first serving space filter.

57. A communication apparatus, applied to a terminal device, the apparatus comprising:
a first sending unit, configured to, in a case where a first event meets a preset condition, send the first event to a network device on a first Physical Uplink Control Channel (PUCCH) resource or a first Physical Uplink Shared Channel (PUSCH) resource, wherein the first event is used by the network device to determine a first serving spatial filter for a first time period.

58. A communication apparatus, applied to a network device, the apparatus comprising:
a second receiving unit, configured to receive, on a first Physical Uplink Control Channel (PUCCH) resource or a first Physical Uplink Shared Channel (PUSCH) resource, a first event sent by a terminal device, the first event meeting a preset condition, and the first event being used by the network device to determine a first serving space filter for a first time period.

59. A communication device, comprising:
a memory configured to store a computer program;
a processor, connected to the memory, configured to invoke and execute the computer program from the memory to perform the method of any one of claims 1 to 27, or to perform the method of any one of claims 28 to 56; and
a transceiver configured to receive and send information in the process of sending and receiving the information to or from another external device.

60. A chip, comprising:
a memory configured to store a computer program;
a processor, connected to the memory, configured to invoke and execute the computer program from the memory to cause a device mounted with the chip to perform the method of any one of claims 1 to 27, or to perform the method of any one of claims 28 to 56; and
a transceiver, configured to receive and send information in the process of sending and receiving the information to or from the device or chip.

61. A computer-readable storage medium having stored thereon a computer program that, when executed by at least one processor, implements the method of any one of claims 1 to 27, or implements the method of any one of claims 28 to 56.

62. A computer program product, comprising computer programs or instructions that, when executed by a processor, implement the method of any one of claims 1 to 27, or implement the method of any one of claims 28 to 56.

63. A computer program, causing a computer to implement the method of any one of claims 1 to 27, or the method of any one of claims 28 to 56.
